# EUROPÄISCHE PATENTANMELDUNG

(11) **EP 4 703 515 A1**
(43) Veröffentlichungstag der Anmeldung: **04.03.2026**
(21) Anmeldenummer: 25184560.8
(22) Anmeldetag: 23.06.2025
(51) Int. Cl.: E01C 19/22, E01C 19/23, E01C 19/28, E01C 19/34, E02D 3/046, H01M 10/613, H02K 9/193

(54) **BODENVERDICHTUNGSMASCHINE UND VERFAHREN ZUM BETRIEB EINER BODENVERDICHTUNGSMASCHINE**

(30) Priorität: 27.08.2024 DE 102024124436
(71) Anmelder: BOMAG GmbH, 56154 Boppard (DE)
(72) Erfinder: Becker, Jost, 56154 Boppard (DE); Zohner, Raphael, 86154 Boppard (DE); Schmidt, Dominik, 56154 Boppard (DE)
(74) Vertreter: Zimmermann & Partner Patentanwälte mbB

(57) **Zusammenfassung**

Die Erfindung eine Bodenverdichtungsmaschine mit einem Maschinenrahmen, einer bewegbar an dem Maschinenrahmen gelagerten Bodenkontakteinrichtung, einer Schwingungserregungseinrichtung sowie einer ein Gehäuse umfassende elektrische Betriebskomponente. Die Erfindung betrifft ferner auch ein Verfahren zum Betrieb einer Bodenverdichtungsmaschine. Es ist ein Wärmetauscherfluidtank vorgesehen, mit dem ein konduktiver Wärmeaustausch zwischen der elektrischen Betriebskomponenten und in einem Speicherraum des Wärmetauscherfluidtanks bevorratetem Wärmetauscherfluid erfolgt.

## Beschreibung

Die Erfindung betrifft eine Bodenverdichtungsmaschine sowie ein Verfahren zum Betrieb einer Bodenverdichtungsmaschine.

Bodenverdichtungsmaschinen bezeichnen Maschinen, die zur Verdichtung des Bodenuntergrundes eingesetzt werden, beispielsweise im Straßen-, Wege- und Trassenbau sowie bei sonstigen Baumaßnamen, bei denen ein verdichteter Bodenuntergrund gewünscht wird. Derartige Bodenverdichtungsmaschinen weisen typischerweise ein Bodenkontaktelement auf, das auf der Bodenoberfläche aufsteht und/oder sich über diese bewegt und dadurch statisch und/oder dynamisch auf den Bodenuntergrund zu Verdichtungszwecken einwirkt. Derartige Bodenverdichtungsmaschinen können handgeführt, ferngesteuert und/oder durch einen mit der Bodenverdichtungsmaschine mitfahrenden Bediener von einem Fahrstand aus bedient werden.

Es ist bekannt, derartige Bodenverdichtungsmaschinen konventionell durch einen Verbrennungsmotor anzutreiben. Die mit dem Betrieb eines Verbrennungsmotors einhergehende Emissionsbelastung für den Bediener und/oder die Umwelt wird zunehmend jedoch als nachteilig empfunden und/oder durch gesetzliche Regelungen limitiert. Um diesen Erfordernissen nachzukommen, ist es bereits bekannt, Bodenverdichtungsmaschinen mit einem hybriden oder einem vollelektrischen Antriebssystem auszustatten. Um die für den elektrischen Betrieb einer solchen Bodenverdichtungsmaschine erforderliche elektrische Energie bereitzustellen, ist es ferner bereits bekannt, diese Bodenverdichtungsmaschinen mit einem Kabel an eine elektrische Energiequelle anzuschließen und/oder mit einem Energiespeichermodul, insbesondere in Form einer wiederaufladbaren Batterie bzw. eines Akkumulators, auszustatten, das/der von der Bodenverdichtungsmaschine im Betrieb mitgeführt wird und beispielsweise auch austauschbar sein kann. Beim Betrieb einer Bodenverdichtungsmaschine mithilfe elektrischer Energie kann es jedoch zu nicht unerheblichen Temperaturbelastungen der elektrischen Betriebskomponenten kommen. Derartige elektrische Betriebskomponenten können insbesondere ein oder mehrere elektrische Energiespeicher, Stromrichter und/oder Elektromotoren sein. In diesem Zusammenhang ist es bekannt, bei einer Bodenverdichtungsmaschine in Form eines Stampfers den wechselbaren elektrischen Energiespeicher eines elektrischen Antriebssystems mittels einer durch ein Gebläse erzeugten Kühlluftströmung zu kühlen. Dies ist beispielsweise in der DE 10 2010 055 632 A1 offenbart. Derartige Luftkühlungen können allerdings auch nachteilig sein, denn sie sind konstruktiv vergleichsweise aufwändig, verbrauchen zusätzliche elektrische Energie und können die zu steuernden Prozesse bei einer solchen Bodenverdichtungsmaschine erheblich verkomplizieren.

Hiervon ausgehend ist es die Aufgabe der Erfindung, eine Möglichkeit anzugeben, den Betrieb einer oder mehrerer elektrischer Betriebskomponenten einer Bodenverdichtungsmaschine zu vereinfachen.

Die Lösung der Aufgabe gelingt mit einer Bodenverdichtungsmaschine sowie mit einem Verfahren gemäß den unabhängigen Ansprüchen. Bevorzugte Weiterbildungen sind in den abhängigen Ansprüchen angegeben.

Eine erfindungsgemäße Bodenverdichtungsmaschine umfasst einen Maschinenrahmen, eine bewegbar an dem Maschinenrahmen gelagerte Bodenkontakteinrichtung, eine Schwingungserregungseinrichtung, die die Bodenkontakteinrichtung in einem Verdichtungsbetrieb in eine schwingende und/oder stampfende Bewegung versetzt, und eine ein Gehäuse umfassende elektrische Betriebskomponente.

Bei dem Maschinenrahmen kann es sich insbesondere um eine Tragstruktur handeln, an der Komponenten der Bodenverdichtungsmaschine gelagert sein können, insbesondere beispielsweise die Bodenkontakteinrichtung und/oder ein oder mehrere Elektromotoren und/oder eine oder mehrere elektrische Betriebskomponenten und/oder eine Handführungseinrichtung. Der Maschinenrahmen kann als sogenannter Oberbau ausgebildet sein, an dem ein die Bodenkontakteinrichtung umfassender Unterbau bewegbar gelagert ist. Sofern es sich bei der Bodenverdichtungsmaschine um eine handgeführte Bodenverdichtungsmaschine handelt, kann eine Handführungseinrichtung, wie insbesondere ein Führungsbügel oder eine Führungsdeichsel, an dem Maschinenrahmen angelenkt sein, üblicherweise über geeignete Schwingungsdämpfungselemente.

Die Bodenkontakteinrichtung bezeichnet diejenige Einheit der Bodenverdichtungsmaschine, die im Bodenverdichtungsprozess und bei bestimmungsgemäßer Verwendung der Bodenverdichtungsmaschine zumindest übergangsweise in direktem Kontakt mit der Bodenoberfläche steht. Das Bodenkontaktelement kann über den zu verdichtenden Bodenuntergrund abrollen, wie es beispielsweise bei Walzbandagen der Fall ist, oder sich über den Bodenuntergrund stampfend und/oder springend bewegen, wie es beispielsweise bei einem Bodenkontaktelement in Form eines Stampffußes eines Vibrationsstampfers und bei einem Bodenkontaktelement in Form einer Grund- bzw. Stampfplatte bei einer Rüttelplatte der Fall ist. Das Bodenkontaktelement kann über ein oder mehrere Schwingungsdämpfungselemente mit dem Maschinenrahmen der Bodenverdichtungsmaschine verbunden sein.

Bei der Schwingungserregungseinrichtung kann es sich um eine Einrichtung handeln, die das Bodenkontaktelement in eine schwingende und/oder stampfende Bewegung relativ zum Maschinenrahmen versetzt. Hierbei kann es sich beispielsweise um einen oder mehrere Unwuchterreger, insbesondere bei Bodenverdichtungsmaschinen vom Typ Walze und Rüttelplatte, oder um einen Kurbeltrieb, insbesondere bei Bodenverdichtungsmaschinen vom Typ Vibrationsstampfer, handeln. Die Schwingungserregungseinrichtung kann auch gleichzeitig mehrere Einzelschwingungserregungseinrichtungen aufweisen, die in ihrem Schwingungsverhalten insbesondere relativ zueinander koordiniert betreibbar sein können, beispielsweise um verschiedene Verdichtungseffekte der Bodenverdichtungsmaschine zu erreichen und/oder eine angetriebene Maschinenbewegung zu beeinflussen.

Die Bodenverdichtungsmaschine kann eine oder mehrere elektrische Betriebskomponenten umfassen. Vorliegend werden mit elektrischen Betriebskomponenten insbesondere derartige Komponenten der Bodenverdichtungsmaschine bezeichnet, die im Betrieb der Bodenverdichtungsmaschine elektrische Energie liefern, umwandeln und/oder verbrauchen und dabei Wärme entwickeln. Ganz besonders betrifft die Erfindung solche elektrische Betriebskomponenten, die in einen elektrischen Antriebsstrang ausgehend von einer elektrischen Primärenergiequelle, wie beispielsweise einer Batterie, bis hin zu einem Fahrantrieb und/oder Antrieb einer Schwingungserregungseinrichtung eingebunden sind. Die im Betrieb der elektrischen Betriebskomponenten entstehende Wärme kann die Betriebszuverlässigkeit der Bodenverdichtungsmaschine, die Reichweite und/oder die Lebensdauer der jeweiligen elektrischen Betriebskomponente beeinflussen.

Konkret kann es sich bei der elektrischen Betriebskomponente beispielsweise um einen elektrischen Energiespeicher mit einem oder mehreren Energiespeicherelementen bzw. -zellen handeln, beispielsweise also um eine Batterie und/oder einen Akkumulator. Der elektrische Energiespeicher kann insbesondere als ein auswechselbares, insbesondere werkzeuglos austauschbares, Energiespeichermodul ausgebildet sein. Derartige austauschbare Energiespeichermodule werden beispielsweise dann verwendet, wenn das Energiespeichermodul häufig gewechselt werden können soll, beispielsweise bei der Verwendung von wiederaufladbaren Akkumulatoren. Beim Entladen und Laden des elektrischen Energiespeichers kann es zu einer Entwicklung von Wärme kommen.

Bei der elektrischen Betriebskomponente kann es sich ergänzend oder alternativ auch insbesondere um einen oder mehrere Stromrichter handeln. Ein solcher Stromrichter kann auch als Leistungselektronik bezeichnet werden. Ein Stromrichter wandelt eine eingehende Stromart in eine andere ausgehende Stromart um, beispielsweise aus einem elektrischen Energiespeicher bezogenen Gleichstrom in einen Wechselstrom, insbesondere Drehstrom. Auch im Rahmen dieser Umwandlung kann sich der Stromrichter erwärmen.

Weiter ergänzend oder alternativ kann die elektrische Betriebskomponente auch ein Elektromotor sein. Ein Elektromotor wandelt eingehende elektrische Energie in mechanische Energie um und kann vorliegend insbesondere zum Antrieb einer oder mehrerer Schwingungserregungseinrichtungen und/oder eines Fahrantriebs genutzt werden. Bei dem Elektromotor kann es sich insbesondere um einen Gleichstrommotor oder einen Wechselstrommotor, ganz besonders um einen Drehstrommotor, handeln. Der Elektromotor kann insbesondere ein BLDC-Motor (*brushless DC motor*) sein.

Die Bodenverdichtungsmaschine kann eine oder mehrere der elektrischen Betriebskomponenten gleichzeitig aufweisen. Sie kann ferner gleichzeitig auch mehrere gleichartige elektrische Betriebskomponenten aufweisen, insbesondere mehrere elektrische Energiespeicher und/oder mehrere Elektromotoren.

Die elektrische Betriebskomponente kann ein Gehäuse aufweisen. Das Gehäuse kann die Außenoberfläche der elektrischen Betriebskomponente bilden und gleichzeitig eine Schutzfunktion für innerhalb des Gehäuses angeordnete Funktionskomponenten der jeweiligen elektrischen Betriebskomponente erfüllen. Die elektrische Betriebskomponente kann insbesondere derart ausgebildet sein, dass sie ein Schutzniveau von vorzugsweise IP67 gemäß DIN EN 60529:2014-09 erfüllt. Dies kann insbesondere bedeuten, dass das Gehäuse der elektrischen Betriebskomponente staubdicht ausgebildet ist, und dass durch das Gehäuse ein vollständiger Schutz gegen Berührungen sowie ein Schutz gegen zeitweiliges Untertauchen besteht.

Es kann erfindungsgemäß nun insbesondere vorgesehen sein, dass die Bodenverdichtungsmaschine einen Wärmetauscherfluidtank umfasst. Der Wärmetauscherfluidtank bezeichnet somit eine Einrichtung, die zur Aufnahme und Speicherung eines Wärmetauscherfluids ausgebildet ist. Dazu umfasst der Wärmetauscherfluidtank wenigstens und insbesondere ausschließlich einen Speicherraum, der mit einem Wärmetauscherfluid befüllt ist. Dies bedeutet nicht, dass der Speicherraum randvoll mit einem Wärmetauscherfluid befüllt sein muss. Es sollte allerdings ausreichend Wärmetauscherfluid im Speicherraum vorhanden und bevorratet sein, um die nachstehend noch näher beschriebene Wärmespeicher- und/oder - abgabefunktion ausfüllen zu können. Der Speicherraum bezeichnet somit insbesondere einen Hohlraum des Wärmetauscherfluidtanks, in dem Wärmetauscherfluid gespeichert ist und von der Bodenverdichtungsmaschine im Bodenverdichtungsbetrieb mitgeführt werden kann.

Bei dem innerhalb des Speicherraums des Wärmetauscherfluidtanks bevorrateten Wärmetauscherfluid handelt es sich um eine Flüssigkeit oder ein Flüssigkeitsgemisch. Dies kann insbesondere bedeuten, dass es sich bei dem Wärmetauscherfluid um ein Fluid handeln kann, das wenigstens in einem Temperaturbereich von größer 0 °C bis 60 °C, ganz besonders wenigstens in einem Temperaturbereich von -20 °C bis 90 °C, in einem flüssigen Aggregatzustand vorliegt. Das Wärmetauscherfluid kann beispielsweise Wasser, ein Wasser-Glykol-Gemisch, Öl oder eine andere dielektrische Flüssigkeit und/oder ein Gemisch davon sein. Das Wärmetauscherfluid kann zudem einen oder mehrere Zusätze umfassen, die eine schmelzpunktsenkende und/oder siedepunkterhöhende und/oder biozide Wirkung aufweisen.

Die erfindungsgemäße Bodenverdichtungsmaschine kann ferner eine Wärmeaustauschfläche innerhalb des Wärmetauscherfluidtanks umfassen. Der nachstehend noch näher beschriebene Wärmeaustausch zwischen der elektrischen Betriebskomponente und dem innerhalb des Speicherraums befindlichen Wärmetauscherfluid erfolgt somit innerhalb des Wärmetauscherfluidtanks, insbesondere durch einen konduktiven Wärmeleitvorgang über die Wärmeaustauschfläche. Es ist demnach insbesondere vorgesehen, dass der Wärmeaustausch zwischen der elektrischen Betriebskomponente und dem Wärmetauscherfluid im Speicherraum des Wärmetauscherfluidtanks selbst erfolgt und Wärmetauscherfluid somit gerade nicht innerhalb eines aufwändigen Kühlfluidkreislaufes, in dem es aus dem Wärmetauscherfluidtank entnommen und an anderer Stelle wieder zugeführt wird, zirkuliert wird und dadurch außerhalb des Wärmetauscherfluidtanks Wärme mit der elektrischen Betriebskomponente austauscht. Auch wenn durch die dem Wärmetauscherfluid innewohnende Wärmekapazität dadurch ein gegenüber konventionellen Kühlkreisläufen weniger effizientes Wärmetauschersystem erhalten wird, hat sich gezeigt, dass für den spezifischen Anwendungsfall der erfindungsgemäßen Bodenverdichtungsmaschine die erreichbaren Wärmemanagementeffekte ausreichend sein können. Von der Erfindung umfasst sind neben konduktiven Wärmetauschprozessen, in denen der elektrischen Betriebskomponente Wärmeenergie aus dem Wärmetauscherfluid zugeführt wird, insbesondere auch Kühlprozesse der elektrischen Betriebskomponente, d.h. Wärmetauschprozesse, in denen der elektrischen Betriebskomponente Wärmeenergie durch das Wärmetauscherfluid über die Wärmetauscherfläche entzogen wird. Es wird vorliegend somit die Wärmekapazität des innerhalb des Speicherraums des Wärmetauscherfluidtanks bevorrateten Wärmetauscherfluids als Kälte- und/oder Wärmespeicher genutzt, um einen Wärmeaustausch, insbesondere zu Kühlzwecken, mit der elektrischen Betriebskomponente zu ermöglichen.

Die Erfindung betrifft somit insbesondere solche Ausführungsformen, bei denen die elektrische Betriebskomponente und das Wärmetauscherfluid über die Wärmetauscherfläche direkt miteinander in unmittelbarem Kontakt miteinander stehen. Es kann daher auch bevorzugt sein, wenn der Wärmetauscherfluidtank eine in Vertikalrichtung obenliegende Aufnahmeöffnung aufweist, und die elektrische Betriebskomponente, zumindest wenigstens teilweise, durch die Aufnahmeöffnung hindurch in den mit Wärmetauscherfluid befüllten Speicherraum hineinragt. Die Aufnahmeöffnung bezeichnet somit insbesondere eine solche Öffnung des Wärmetauscherfluidtanks, über die wenigstens ein Teil der elektrischen Betriebskomponente in den vom Wärmetauscherfluidtank bzw. dessen Tankwänden gebildeten Innenraum einbringbar ist. Der Wärmetauscherfluidtank kann dazu idealerweise eine Bodenwand und sich an die Bodenwand in Vertikalrichtung anschließende und von der Bodenwand aufragende Seitenwände aufweisen. Durch das Vorsehen der Aufnahmeöffnung in Vertikalrichtung obenliegend kann vergleichsweise einfach sichergestellt werden, dass beim Ein- und Ausbringen der elektrischen Betriebskomponente in den Innenraum des Wärmetauscherfluidtanks kein Wärmetauscherfluid aus dem Speicherraum schwerkraftgetrieben ausläuft.

Es ist möglich, dass der Wärmetauscherfluidtank innerhalb des Speicherraums eine wenigstens einen Teil der Wärmeaustauschfläche bildende Kontaktmembran aus einem flexiblen und fluiddichten Material aufweist. Die Kontaktmembran kann einen Aufnahmeraum für die elektrische Betriebskomponente innerhalb des Wärmetauscherfluidtanks von einem das Wärmetauscherfluid aufnehmenden und bevorratenden Speicherraum innerhalb des Wärmetauscherfluidtanks mechanisch trennen. Auf diese Weise kann erreicht werden, dass die elektrische Betriebskomponente nicht unmittelbar mit dem Wärmetauscherfluid im Kontakt steht, dennoch aber eine formschlüssige und flächige Anlage zwischen der elektrischen Betriebskomponente und der Kontaktmembran erhalten wird, um einen zumindest nahezu ausschließlich konduktiven Wärmeübergang über das Gehäuse der elektrischen Betriebskomponente und über die Kontaktmembran zum Wärmetauscherfluid zu ermöglichen. Die Kontaktmembran kann dazu insgesamt sackartig und/oder fluiddicht gegenüber dem Wärmetauscherfluid ausgebildet sein. Sie kann ergänzend oder alternativ in einer die Aufnahmeöffnung umlaufenden Weise angeordnet sein, beispielsweise mit dem übrigen Wärmetauscherfluidtank im Bereich der Aufnahmeöffnung verschweißt und/oder verklebt und/oder verklemmt sein.

Es ist jedoch besonders bevorzugt, wenn das Gehäuse der elektrischen Betriebskomponente direkt mit dem Wärmetauscherfluid innerhalb des Wärmetauscherfluidtanks benetzt wird bzw. direkt mit diesem im Kontakt steht. Die elektrische Betriebskomponente kann somit derart relativ zum Wärmetauscherfluidtank angeordnet sein, dass sie direkt in das innerhalb der Speicherraums befindliche Wärmetauscherfluid eintaucht. In diesem Fall bildet ausschließlich das Gehäuse der elektrischen Betriebskomponente, insbesondere der vom Wärmetauscherfluid benetzte Bereich des Gehäuses der elektrischen Betriebskomponente, die Wärmeaustauschfläche, über die Wärme direkt zwischen dem Wärmetauscherfluid innerhalb des Wärmetauscherfluidtanks und der elektrischen Betriebskomponente ausgetauscht wird. Dazu kann es vorgesehen sein, dass das Wärmetauscherfluid das Gehäuse der elektrischen Betriebskomponente wenigstens auf einer Seite benetzt, wobei es bevorzugt ist, wenn das Gehäuse der elektrischen Betriebskomponente insbesondere nicht nur im Bereich einer Bodenwand, sondern gleichzeitig auch im Bereich mehrerer Seitenwände von dem Wärmetauscherfluid benetzt wird. Ganz besonders bevorzugt ist es, wenn die elektrische Betriebskomponente derart relativ zum Wärmetauscherfluidtank angeordnet ist, dass sie zu über 60%, ganz besonders zu über 80% ihres Gesamtvolumens in das Wärmetauscherfluid eintaucht. Es kann vorgesehen sein, dass die elektrische Betriebskomponente, bis auf unter Umständen vorhandene Lagereinrichtungen und/oder elektrische Energieübertragungsverbindungen, vollständig in das Wärmetauscherfluid eintaucht bzw. das Gehäuse der elektrischen Betriebskomponente vollständig innerhalb des Wärmetauscherfluidtanks bzw. dessen Speicherraum mit Wärmetauscherfluid benetzt wird. Durch ein direktes Benetzen der elektrischen Betriebskomponenten mit dem Wärmetauscherfluid wird eine direkte, zumindest wenigstens teilweise, Ummantelung der elektrischen Betriebskomponente mit dem Wärmetauscherfluid erhalten, wodurch ein besonders effektiver Wärmeaustausch zwischen der elektrischen Betriebskomponente und dem Wärmetauscherfluid ermöglicht wird. Derjenige Bereich des Gehäuses der elektrischen Betriebskomponente, der bei einer bestimmungsgemäßen Verwendung der Bodenverdichtungsmaschine von Wärmetauscherfluid benetzt wird, wird nachstehend auch als Benetzungsbereich bezeichnet. Es versteht sich, dass abhängig von einer aktuellen Schwingungsbelastung und/oder Ausrichtung der Bodenverdichtungsmaschine Randbereiche des Gehäuses der elektrischen Betriebskomponente zeitweise benetzt und zeitweise unbenetzt sein können. Der Benetzungsbereich bezeichnet daher vorliegend auch insbesondere denjenigen Bereich der Außenoberfläche des Gehäuses der elektrischen Betriebskomponente, der bei einer bestimmungsgemäßen Verwendung und bei einem bestimmungsgemäßen Gebrauch der Bodenverdichtungsmaschine von Wärmetauscherfluid benetzt werden kann.

Um eine stabile Relativpositionierung der elektrischen Betriebskomponente und dem Speicherraum des Wärmetauscherfluidtanks zueinander zu ermöglichen, kann es vorgesehen sein, dass, insbesondere innerhalb des Speicherraums, ein oder mehrere Seitenführungselemente vorhanden sind, die zur Ausrichtung der elektrischen Betriebskomponente relativ zum Wärmetauscherfluidtank in Horizontalrichtung ausgebildet sind. Hierbei kann es sich beispielsweise um Einbauten innerhalb des Wärmetauschfluidtanks handeln, die zur Fixierung des Energiespeichers relativ zum Wärmetauscherfluidtank dienen. Derartig Seitenführungselemente können beispielsweise von einer Innenwand und/oder von einer Bodenwand des Wärmetauscherfluidtanks in den Innenraum in Richtung der elektrischen Betriebskomponente vorstehende Anlage- und/oder Führungsstege oder ähnliches sein. Diese können beispielsweise massiv oder auch hohl und einseitig zur Außenumgebung des Wärmetauscherfluidtanks offen ausgebildet sein. Es kann vorgesehen sein, dass in Vertikalrichtung der elektrischen Betriebskomponente gesehen mehrere Ebenen derartiger Seitenführungselemente vorhanden sind und/oder sich diese in Vertikalrichtung über einen wesentlichen Teil desjenigen Bereiches der elektrischen Betriebskomponente erstrecken, mit dem diese in den Speicherraum des Wärmetauscherfluidtanks hineinragt. Es ist bevorzugt, wenn die durch diese Seitenführungselemente gebildete Anlagefläche am Gehäuse der elektrischen Betriebskomponenten kleiner 10%, insbesondere kleiner 5%, derjenigen Gesamtaußenoberfläche der elektrischen Betriebskomponente ist, die von dem Wärmetauscherfluid benetzt ist bzw. im Benetzungsbereich liegt. Ergänzend oder alternativ ist es bevorzugt, wenn auf allen der sich einander gegenüberliegenden Flächen des Gehäuses der elektrischen Betriebskomponente, die in Vertikalrichtung innerhalb des Wärmetauscherfluidtanks aufragen, wenigstens ein solches Seitenführungselement vorhanden ist.

Ergänzend oder alternativ kann es auch vorteilhaft sein, wenn, insbesondere innerhalb des Speicherraums, ein oder mehrere Aufstandselemente vorhanden sind bzw. insbesondere von dem Wärmetauscherfluidtank umfasst sind, auf denen die elektrische Betriebskomponente innerhalb des Wärmetauscherfluidtanks aufsteht. Dies können beispielsweise sockelartige Elemente sein, die von einem Boden des Wärmetauscherfluidtanks in Vertikalrichtung aufragen und auf denen die elektrische Betriebskomponente mit einem Bodenbereich aufsteht.

Es ist möglich, dass das oder die Seitenführungselemente und das oder die Aufstandselemente kombiniert ausgebildet sind, insbesondere derart, dass von einem oder mehreren Aufstandselementen außenliegende bzw. an diese anschließende Wandbereiche über eine Aufstandsfläche der Aufstandselemente in Vertikalrichtung überstehen und das Gehäuse der elektrischen Betriebskomponente im unteren Seitenwandbereich wenigstens teilweise umgreifen.

Teil des Wärmetauscherfluidtanks können ferner eine oder mehrere Zentrierhilfen sein. Mit Zentrierhilfen werden vorliegend insbesondere solche Lagerstrukturen bezeichnet, die eine oder mehrere Gleitschrägen aufweisen, an denen entlang das Gehäuse der elektrischen Betriebskomponente beim Einsetzen in den Wärmetauscherfluidtank in Richtung einer definierten Endlage entlanggleitet.

Um insbesondere im Verdichtungsbetrieb und/oder während eines Transports der Bodenverdichtungsmaschine zu gewährleisten, dass die elektrische Betriebskomponente lagestabil relativ zum Wärmetauscherfluidtank gehalten wird, kann die Bodenverdichtungsmaschine eine Fixiereinrichtung aufweisen, die die elektrische Betriebskomponente relativ zum Wärmetauscherfluidtank fixiert. Die Fixiereinrichtung kann dazu insbesondere lösbar, ganz besonders zerstörungsfrei und werkzeuglos lösbar, sein. Ideal ist es, wenn die Fixiereinrichtung derart ausgebildet ist, dass sie in einer die elektrische Betriebskomponente fixierenden Stellung diese gleichzeitig mit einer Haltespannkraft in Richtung zum Wärmetauscherfluidtank beaufschlagt. Beispielsweise kann die Fixiereinrichtung dazu einen oder mehrere Spannverschlüsse und/oder Spanngurte aufweisen. Auch der Rückgriff auf beispielsweise Schraubverbindungen und/oder Exzenterverschlüsse ist möglich.

Es kann vorteilhaft sein, wenn das Gehäuse der elektrischen Betriebskomponente derart ausgebildet ist, dass es in seiner Endlage im Wärmetauscherfluidtank nicht vollständig in den Speicherraum hineinversenkt wird. Um dies zu erreichen, besteht eine Möglichkeit darin, dass das Gehäuse der elektrischen Betriebskomponente einen, dieses insbesondere in einer Ebene, ganz besonders in einer horizontalen Ebene, umlaufenden, Anlagekragen aufweist, der an dem Wärmetauscherfluidtank anliegt und/oder auf dem Wärmetauscherfluidtank aufliegt. Dazu kann eine im Anlagebereich zur elektrischen Betriebskomponente komplementäre Anlageformation von dem Wärmetauscherfluidtank umfasst sein, an der die elektrische Betriebskomponente formschlüssig anliegt. Insbesondere in diesem Anlagebereich kann auch eine Dichtung vorgesehen sein, so dass die elektrische Betriebskomponente gleichzeitig als eine Art den Speicherraum des Wärmetauscherfluidtank zur Außenumgebung hin abdichtender Deckel wirkt.

Es kann vorteilhaft sein, wenn der Abstand der Außenoberfläche des Gehäuses der elektrischen Betriebskomponente zur Innenoberfläche des Wärmetauscherfluidtanks, insbesondere in einer horizontalen Ebene, wenigstens 5mm, insbesondere wenigstens 10mm, beträgt. Dies betrifft zumindest den Benetzungsbereich der elektrischen Betriebskomponente bzw. denjenigen Bereich der elektrischen Betriebskomponente, der von dem Wärmetauscherfluid innerhalb des Wärmetauscherfluidtanks benetzt ist. Die Abstände auf den einzelnen Seiten können gleich groß oder auch verschieden groß sein. Ergänzend oder alternativ ist es auch bevorzugt, wenn der Boden der elektrischen Betriebskomponente zum Boden des Wärmetauscherfluidtanks in Vertikalrichtung gesehen mindestens um 5mm, insbesondere um mindestens 10mm, beabstandet ist. Gegebenenfalls vorhandene Anlagestellen zu einem der mehreren Seitenführungselemente und/oder Aufstandselemente können hiervon ausgenommen sein.

Da die erfindungsgemäße Bodenverdichtungsmaschine, insbesondere im Verdichtungsbetrieb, erheblichen Vibrationen ausgesetzt sein kann, ist es im praktischen Einsatz vorteilhaft, wenn ein oder mehrere Abdichtelemente vorhanden sind, die den Speicherraum des Wärmetauscherfluidtanks zur Außenumgebung hin abdichten, insbesondere in einem Abdichtbereich zwischen dem Wärmetauscherfluidtank und der elektrischen Betriebskomponente und/oder zwischen dem Wärmetauscherfluidtank und einem Deckel. Auf diese Weise kann vermieden werden, dass Wärmetauscherfluid aus dem Speicherraum herausspritzt. Derartige Abdichtelemente können beispielsweise Gummi- oder Kunststoffdichtungen, Labyrinthdichtungen und/oder O-Ringdichtungen sein.

Die elektrische Betriebskomponente ist eine Komponente, die im Arbeitsbetrieb der Bodenverdichtungsmaschine elektrische Energie liefert und/oder umwandelt. Sie ist insbesondere eine Komponente eines elektrischen Antriebsstranges der Bodenverdichtungsmaschine, insbesondere eines zwischen einem elektrischen Energiespeicher der Bodenverdichtungsmaschine und der Schwingungserregungseinrichtung verlaufenden elektrischen Antriebsstranges, wobei der elektrische Energiespeicher selbst ebenfalls Teil des elektrischen Antriebsstranges ist. Es kann daher vorgesehen sein, dass die elektrische Betriebskomponente einen, insbesondere zerstörungsfrei lösbaren, Verbindungsanschluss zum Erhalt bzw. zur Herstellung einer oder mehrerer strom- und/oder signalleitender Verbindungen umfasst. Insbesondere bei Wechselkomponenten, wie beispielsweise einem elektrischen Energiespeicher in Form eines Wechselakkumulators, kann es vorgesehen sein, dass dieser Verbindungsanschluss, beispielsweise in Form eines Steckkontaktes, regelmäßig gelöst und wiederhergestellt werden muss. Um es in diesem Zusammenhang zu verhindern, dass Wärmetauscherfluid in den Innenbereich des Verbindungsanschlusses gelangt, kann es vorgesehen sein, dass dieser fluiddicht gekapselt ausgebildet ist. Ergänzend oder alternativ kann es auch vorgesehen sein, dass der Verbindungsanschluss an einer, insbesondere außerhalb vom Benetzungsbereich und ganz besonders außerhalb des Speicherraums des Wärmetauscherfluidtanks liegenden, Oberseite der elektrischen Betriebskomponente angeordnet ist. Ergänzend oder alternativ kann es auch vorgesehen sein, dass der Verbindungsanschluss an einer Seite der elektrischen Betriebskomponente angeordnet ist, die sich in einem vom Wärmetauscherfluid nicht benetzten Bereich der elektrischen Betriebskomponente befindet. Ergänzend oder alternativ kann es vorteilhaft sein, wenn der Verbindungsanschluss in Vertikalrichtung oberhalb einer Abdichteinrichtung, die den Speicherraum gegenüber der Außenumgebung, insbesondere mithilfe der elektrischen Betriebskomponente, abdichtet, positioniert ist. Die elektrische Betriebskomponente kann mehrere derartiger Verbindungsanschlüsse umfassen.

Für die Ausbildung des Wärmetauscherfluidtanks kann es zunächst wichtig sein, dass dieser einen Aufnahmeraum zur Verfügung stellt, der zur Aufnahme und Lagerung bzw. Bevorratung des Wärmetauscherfluids in der Bodenverdichtungsmaschine ausgebildet ist. Der Wärmetauscherfluidtank kann dazu einen den Speicherraum bildenden Grundkörper aufweisen. Dieser kann beispielsweise zumindest in Vertikalrichtung nach oben wenigstens teilweise offen ausgebildet sein, um einen Zugriff von außerhalb des Wärmetauscherfluidtanks in den Speicherraum zu ermöglichen. Dies kann zu Wartungszwecken sinnvoll sein aber beispielsweise auch für den Austausch der elektrischen Betriebskomponente. Ist der Grundkörper des Wärmetauscherfluidtanks in Vertikalrichtung nach oben wenigstens teilweise offen ausgebildet, ist es vorteilhaft, wenn der Wärmetauscherfluidtank einen den Speicherraum zur Außenumgebung hin verschließenden Deckel umfasst. Dieser kann insbesondere von dem Grundkörper abnehmbar ausgebildet sein. Ergänzend oder alternativ können ein oder mehrere Befestigungseinrichtungen umfasst sein, die den Deckel am Grundkörper, insbesondere formschlüssig, festlegen. Dies können beispielsweise lösbare Rastverbindungen oder ähnliches sein. Es können eine oder mehrere Abdichtelemente, wie beispielsweise eine Dichtlippe etc., vorhanden sein, die den Speicherraum im Kontaktbereich zwischen dem Deckel und dem Grundkörper zur Außenumgebung hin abdichten. Der Deckel kann von der elektrischen Betriebskomponente selbst gebildet werden. Alternativ ist es auch möglich, dass der Deckel in Form eines Adapterdeckels ausgebildet ist und/oder mehrere Deckel vorhanden sind, die jeweils auf den Grundkörper gesetzt werden können und die jeweils an verschiedene elektrische Betriebskomponenten angepasst sein können, insbesondere beispielsweise an elektrische Energiespeicher verschiedener Hersteller.

Der Deckel kann vollständig vom Grundkörper abnehmbar ausgebildet sein. Um den Deckel gegenüber dem Grundkörper verliersicher auszubilden, kann es jedoch auch vorgesehen sein, dass ein Verbindungsgelenk zwischen dem Grundkörper und dem Deckel vorhanden ist, und dass der Deckel gegenüber dem Grundkörper um das Verbindungsgelenk verstellbar ist. Konkret kann der Deckel beispielsweise gegenüber dem Grundkörper zwischen einer Offenstellung, in der der Speicherraum von außen aus zugängig ist, und einer Schließstellung, in der der Deckel den Speicherraum zur Außenumgebung hin verschließt, verstellbar sein. Ein solches Verbindungsgelenk kann beispielsweise ein Schwenkgelenk sein.

Hinsichtlich der Materialwahl zur Ausbildung des Wärmetauscherfluidtanks kann auf verschiedene Materialien zurückgegriffen werden. Es kann vorteilhaft sein, wenn der Wärmetauscherfluidtank, insbesondere vollständig, aus einem Kunststoffmaterial, insbesondere einem Polymerkunststoffmaterial, besteht. Dies kann beispielsweise ein Polypropylenpolymer-Kunststoff, ein Polyethylenpolymer-Kunststoff oder ein Polypropylen- und/oder Polyethylencopolymer-Kunststoff sein. Der Wärmetauscherfluidtank kann materialeinheitlich ausgebildet sein. Es ist aber auch möglich, dass der Wärmetauscherfluidtank zumindest bereichsweise aus verschiedenen Materialien besteht. Beispielsweise kann es vorgesehen sein, dass Teile des Wärmetauscherfluidtanks nicht aus dem einen Kunststoffmaterial bestehen, sondern beispielsweise aus einem Metall, beispielsweise in Form einer oder mehrerer Aluminiumplatte/- streifen. Insbesondere auch diese Areale können, wie nachstehend noch näher beschrieben, zur Wärmeübertragung aus dem Speicherraum zur Außenumgebung hin und/oder zu außerhalb des Wärmetauscherfluidtanks angeordneten Komponenten genutzt werden.

Die Größe des Wärmetauscherfluidtanks kann variieren und insbesondere auch auf die Größe der jeweiligen elektrischen Betriebskomponente abgestimmt werden. Für die Bodenverdichtungsmaschinen der vorliegenden Art hat es sich allerdings als vorteilhaft herausgestellt, wenn das Aufnahmevolumen des Wärmetauscherfluidtanks im Bereich von 5L bis 50L, insbesondere im Bereich von 10L bis 25L, liegt.

Im Betrieb der Bodenverdichtungsmaschine kann es aufgrund der durch die Schwingungserregungseinrichtung erzeugten Schwingungen zu einer erheblichen Schwingungsbelastung der Bodenverdichtungsmaschine oder zumindest von Teilen der Bodenverdichtungsmaschine kommen. Es kann daher vorteilhaft sein, wenn eine oder mehrere Schwingungsdämpfungselemente vorhanden sind, die eine Schwingungsübertragung zwischen der elektrischen Betriebskomponente und dem Wärmetauscherfluidtank dämpfen. Dazu können beispielsweise auch ein oder mehrere Schwingungsdämpfungselemente innerhalb des Speicherraums vorhanden sein. Insbesondere können dies Schwingungsdämpfungselemente sein, auf denen die elektrische Betriebskomponente aufsteht und/oder an denen sie innerhalb des Speicherraums anliegt. Ergänzend oder alternativ können ein oder mehrere Schwingungsdämpfungselemente auch außerhalb des Speicherraums zwischen der elektrischen Betriebskomponente und dem Wärmetauscherfluidtank angeordnet sein, um eine Schwingungsübertragung zwischen diesen beiden Komponenten zur minimieren. Bei den Schwingungsdämpfungselementen kann es sich beispielsweise um Elemente aus einem elastisch verformbaren Material handeln, beispielsweise in Form eines Gummi- und/oder Kunststoffdämpfungselementes.

Ergänzend oder alternativ kann es auch vorgesehen sein, dass der Wärmetauscherfluidtank über ein oder mehrere Schwingungsdämpfungselemente mit dem Maschinenrahmen der Bodenverdichtungsmaschine verbunden ist. Bei diesen Schwingungsdämpfungselementen kann es sich beispielsweise um ein elastisches Material umfassende Lager, insbesondere Gummi-und/oder Kunststofflager, handeln.

Wie vorstehend erläutert, kann das innerhalb des Wärmetauscherfluidtanks bevorratete Wärmetauscherfluid als Fluidreservoir zur Aufnahme und/oder Abgabe von Wärmeenergie zu Aufwärm- und/oder Kühlzwecken der wenigstens teilweise innerhalb des Speicherraums angeordneten elektrischen Betriebskomponente genutzt werden. Dieser Effekt kann allerdings auch auf außerhalb des Speicherraums positionierte Komponenten ausgedehnt werden. Dazu kann es insbesondere vorgesehen sein, wenn der Wärmetauscherfluidtank einen Anlagebereich auf seiner Außenoberfläche aufweist, und wenn ein im Betrieb der Bodenverdichtungsmaschine Wärme entwickelndes Bauteil in unmittelbarer Anlage mit diesem Anlagebereich steht, insbesondere mit diesem verbunden ist. Der Anlagebereich kann sich insbesondere dadurch auszeichnen, dass er hinsichtlich seiner Außenoberfläche wenigstens teilweise komplementär zum korrespondierenden Anlagebereich dieses Bauteils ausgebildet ist, um eine konduktive Wärmeübertragung zwischen dem Wärmetauscherfluid und diesem Bauteil über den Anlagebereich zu ermöglichen. Insbesondere in diesem Anlagebereich kann es vorgesehen sein, dass der Wärmetauscherfluidtank aus einem Material mit einer vergleichsweise hohen Wärmeleitfähigkeit besteht, beispielsweise aus Aluminium.

Es kann vorteilhaft sein, wenn innerhalb des Wärmetauscherfluidtanks, insbesondere innerhalb des Speicherraums, eine Umwälzeinrichtung und/oder eine passive Turbulenzerzeugungseinrichtung angeordnet ist. Die Umwälzeinrichtung bezeichnet eine aktiv angetriebene und relativ zum Wärmetauscherfluidtank bewegbare Einrichtung zum Umwälzen des Wärmetauscherfluids innerhalb des Speicherraums, wie beispielsweise ein Rührwerk. Die passive Turbulenzerzeugungseinrichtung bezeichnet dagegen eine Einrichtung, die Turbulenzen innerhalb des Wärmetauscherfluids aufgrund von Schüttelbewegungen des Wärmetauscherfluidtanks an sich erzeugt. Dies können beispielsweise ein oder mehrere in das Wärmetauscherfluid hineinragende Umlenkbleche, Turbulatoren etc. sein. Da es sich bei dem innerhalb des Wärmetauscherfluidtanks gespeicherten Wärmetauscherfluidvolumen um ein stehendes Fluidvolumen bzw. um ein Fluidvolumen handeln kann, dem im laufenden Betrieb der Bodenverdichtungsmaschine zumindest kein frisches, insbesondere gekühltes, Wärmetauscherfluid zugeführt wird, kann eine Förderung einer Bewegung des Wärmetauscherfluids innerhalb des Speicherraums den Wärmeaustausch zwischen der elektrischen Betriebskomponente und dem Wärmetauscherfluid an sich verbessern.

Die Bodenverdichtungsmaschine und insbesondere der Wärmetauscherfluidtank kann derart ausgebildet sein, dass der Speicherraum des Wärmetauscherfluidtanks während des Betriebs der Bodenverdichtungsmaschine vollständig geschlossen ist, so dass das innerhalb des Speicherraums befindliche Wärmetauscherfluidvolumen unverändert bleibt. In diesem Fall stellt das innerhalb des Speicherraums bevorratete Wärmetauscherfluidvolumen somit ein Fluidvolumen dar, das ausschließlich zum Wärmeaustausch mit der elektrischen Betriebskomponente dient. Es erfolgt im Betrieb der Bodenverdichtungsmaschine weder ein Zufluss an Wärmetauscherfluid noch ein Abfluss.

Es ist vorgesehen, dass der Wärmetauscherfluidtank in einer Doppelfunktion dahingehend genutzt wird, dass das von ihm aufgenommene Wärmetauscherfluid bzw. zumindest ein Anteil davon als Prozessfluid im laufenden Verdichtungsbetrieb der Bodenverdichtungsmaschine verbraucht wird. Auch für diese Ausführungsform ist es jedoch gerade nicht vorgesehen, dass der Wärmetauscherfluidtank in einen Kühlkreislauf eingebunden ist. Das innerhalb des Wärmetauscherfluidtanks bevorratete Wärmetauscherfluid kann vielmehr allein im laufenden Betrieb der Bodenverdichtungsmaschine aus dem Speicherraum, insbesondere dosiert, abfließen. Dadurch sinkt zwar das beispielsweise zur Aufnahme von Wärmeenergie innerhalb des Speicherraums verfügbare Wärmetauscherfluidvolumen. Dies kann im praktischen Einsatz allerdings hinnehmbar sein. Konkret umfasst die Bodenverdichtungsmaschine eine Berieselungseinrichtung mit einem Fluidauslass, wobei der Fluidauslauss fluidleitend mit dem Wärmetauscherfluidtank verbunden ist, derart, dass im Betrieb der Bodenverdichtungsmaschine im Wärmetauscherfluidtank enthaltenes Wärmetauscherfluid über den Fluidauslass der Berieselungseinrichtung austreten kann. Der Fluidauslass kann beispielsweise eine oder mehrere Fluidaustrittsöffnungen, insbesondere entlang eines Berieselungsbalkens, aufweisen. Es können ein oder mehrere Ventile zwischen dem Fluidauslass und dem Wärmetauscherfluidtank vorgesehen sein, um die fluidleitende Verbindung wahlweise auch unterbrechen zu können. Es kann ergänzend oder alternativ eine Fluidpumpe von der Bodenverdichtungsmaschine umfasst sein, die Wärmetauscherfluid aus dem Speicherraum herauspumpt und dem Fluidauslass, insbesondere unter Druck, zuführt.

Das Befüllen des Wärmetauscherfluidtanks kann beispielsweise über eine Öffnung im Wärmetauscherfluidtank erfolgen, über die auch die elektrische Betriebskomponente wenigstens teilweise in den Speicherraum des Wärmetauscherfluidtanks einführbar ist. Es kann aber auch eine hierzu zusätzliche oder ausschließliche und/oder exklusiv zum Befüllen des Speicherraums vorgesehene Befüllöffnung vorhanden sein. Die Befüllöffnung befindet sich vorzugsweise in einem Bereich auf der in Vertikalrichtung oben liegenden Oberseite oder zumindest in einem in Vertikalrichtung oberen Drittel einer Seitenwand des Wärmetauscherfluidtanks. Ergänzend oder alternativ kann der Wärmetauscherfluidtank eine Ablassöffnung aufweisen, insbesondere in fluidleitender Verbindung mit einem in Vertikalrichtung maximal untenliegenden Bereich des Bodens des Wärmetauscherfluidtanks. Ein Ablassen des Wärmetauscherfluids kann beispielsweise zur Transportzwecken und/oder um die Bodenverdichtungsmaschine winterfest zu machen vorteilhaft sein. Die Ablassöffnung kann ein Ventil, beispielweise einen Absperrhahn oder ähnliches, aufweisen. Es kann weiter ergänzend oder alternativ vorgesehen sein, dass der Wärmetauscherfluidtank eine oder mehrere Ent- und/oder Belüftungsöffnungen umfasst. Diese können dazu dienen, einen Druckausgleich zwischen dem Speicherraum und der Außenumgebung zu ermöglichen. Es ist vorteilhaft, wenn die Ent- und/oder Belüftungsöffnungen, vergleichbar mit der Befüllöffnung, an einer Oberseite des Wärmetauscherfluidtanks angeordnet sind. Die Ent-und/oder Belüftungsöffnung kann eine, insbesondere mechanische, Filterstufe, beispielsweise in Form eines Gewebefilters, aufweisen, um ein Eindringen von Staub von außerhalb der Bodenverdichtungsmaschine zu verhindern. Die Ent- und/oder Belüftungsöffnung mündet bevorzugt in einen unbenetzten Bereich des Speicherraums.

Es können Betriebssituationen auftreten, in denen das Mitführen des Wärmetauscherfluidtanks mit der Bodenverdichtungsmaschine als nachteilig empfunden wird, beispielsweise aus Platzgründen etc. Für diese Einsatzsituationen ist es vorteilhaft, wenn der Wärmetauscherfluidtank abnehmbar an der übrigen Bodenverdichtungsmaschine angeordnet ist und bis auf, insbesondere lösbare, Halteverbindungen keine weiteren Verbindungsstellen, insbesondere zur Fluidleitung des Wärmetauscherfluids, aufweist. Ideal ist es besonders in diesem Zusammenhang daher auch, wenn die wenigstens eine elektrische Betriebskomponente unabhängig von dem Wärmetauscherfluidtank an der übrigen Bodenverdichtungsmaschine gelagert ist. Dies bedeutet, dass es besonders bevorzugt ist, wenn die elektrische Betriebskomponente, die wenigstens teilweise in den Wärmetauscherfluidtank hineinragt, derart an der übrigen Bodenverdichtungsmaschine gelagert ist, dass sie frei von Lagerkräften gegenüber dem Wärmetauscherfluidtank ist.

Aufgrund des mitzuführenden Volumens an Wärmetauscherfluid, kann es zum Erhalt einer optimierten Masseverteilung vorteilhaft sein, wenn die Bodenverdichtungsmaschine einen Elektromotor umfasst, und wenn dieser Elektromotor in Vorwärtsrichtung der Bodenverdichtungsmaschine vor dem Wärmetauscherfluidtank angeordnet ist, in Vertikalrichtung besonders bevorzugt überlappungsfrei gegenüber dem Wärmetauscherfluidtank ist. Ergänzend oder alternativ kann es vorgesehen sein, dass der Elektromotor und der Wärmetauscherfluidtank in Vertikalrichtung sich wenigstens teilweise überlappend angeordnet sind.

Vorzugsweise umfasst die Bodenverdichtungsmaschine einen Füllstandssensor zur Ermittlung eines Füllstandes des Wärmetauscherfluids innerhalb des Wärmetauscherfluidtanks. Bei dem Füllstandssensor kann es sich beispielsweise um einen Schwimmersensor oder ähnliches handeln. Ergänzend oder alternativ kann auch ein transparenter Seitenwandbereich von dem Wärmetauscherfluidtank umfasst sein, so dass der aktuelle Füllstand innerhalb der Speicherraums an Wärmetauscherfluid direkt von außerhalb der Bodenverdichtungsmaschine einsehbar ist. Der Füllstandsensor bzw. die Füllstandsensoreinrichtung kann derart ausgebildet sein, dass er/sie den aktuellen Füllstand von Wärmetauscherfluid innerhalb des Speicherraums innerhalb eines Sollbereiches ermittelt. Es kann ergänzend oder alternativ vorgesehen sein, dass der Füllstandsensor derart ausgebildet ist, dass durch ihn eine Grenzwerterfassung erfolgt, wobei mögliche Grenzwerte maximal gefüllte und/oder maximal niedrige Füllstände mit und/oder ohne in den Speicherraum hineinragender elektrischer Betriebskomponente sein können.

Ergänzend oder alternativ kann es auch vorgesehen sein, dass die Bodenverdichtungsmaschine einen Temperatursensor zur Ermittlung einer Temperatur des Wärmetauscherfluids innerhalb des Wärmetauscherfluidtanks umfasst. Auch hier können Grenzwerte maximal hoher und/oder maximal niedriger Temperaturen festgelegt werden. Ein solcher Temperatursensor kann beispielsweise ein Temperaturfühler oder ähnliches sein.

Es ist auch möglich, dass die Bodenverdichtungsmaschine derart ausgebildet ist, dass im Wärmetauscherfluidtank eine Temperiereinrichtung zum Kühlen und/oder Erwärmen des Wärmetauscherfluids vorhanden ist, wobei die Temperiereinrichtung derart ausgebildet ist, dass ein Kühlen und/oder Erwärmen des Wärmetauscherfluids ohne gleichzeitige Entnahme und/oder Zufuhr von Wärmetauscherfluid aus dem und in den Wärmetauscherfluidtank erfolgt. Der Wärmetauscherfluidtank ist somit nach wie vor als eine Art "Wärmetauscherfluidbad" ohne Einbindung in einen Wärmetauscherfluidkühlkreislauf ausgebildet bzw. ohne, dass ein Austausch an Wärmetauscherfluid erfolgt. Bei der Temperiereinrichtung kann es sich beispielsweise um eine in das Wärmetauscherfluid eintauchende Heizspirale und/oder einen Kühlfinger handeln.

Teil der Bodenverdichtungsmaschine kann eine Steuereinheit sein, die beispielsweise die von den Sensoren erhaltenen Sensordaten überwacht und/oder verarbeitet. Ist der Füllstand des Wärmetauscherfluids innerhalb des Wärmetauscherfluidtanks beispielsweise zu niedrig und/oder steigt die Temperatur des Wärmetauscherfluids über eine festgelegte Schwellentemperatur, kann die Steuereinheit derart ausgebildet sein, dass sie beispielsweise in die Maschinensteuerung eingreift. Ein solcher Eingriff kann beispielsweise darin bestehen, dass der maximale Umsatz elektrischer Energie einer oder mehrere elektrischer Betriebskomponenten pro Zeiteinheit beschränkt wird, um einer weitergehenden Wärmeentwicklung in einem ungewünschten Ausmaß entgegenzutreten.

Die Bodenverdichtungsmaschine kann eine Anzeigeeinrichtung umfassen, die zur akustischen und/oder visuell wahrnehmbaren Anzeige beispielsweise eines oder mehrerer der von einem oder mehreren der Sensoren ermittelter Messwerte und/oder daraus abgeleiteter Informationen ausgebildet ist. Die Anzeigeeinrichtung kann von der Steuereinheit gesteuert werden und beispielsweise in Form eines Displays und/oder einer oder mehrerer Signalleuchten und/oder eines Lautsprechers etc. ausgebildet sein. Auch eine Übertragung auf ein Mobilteil, beispielsweise ein Smartphone, eine Fernsteuerung oder ähnliches, ist möglich.

Die konkrete Ausbildung der Bodenverdichtungsmaschine kann variieren. In einer bevorzugten Ausführungsform handelt es sich bei der Bodenverdichtungsmaschine um einen Vibrationsstampfer. Dieser umfasst als Maschinenrahmen einen Oberbau, an dem, üblicherweise über Schwingungsdämpfungselemente, eine Handführungseinrichtung, insbesondere ein Führungsbügel, angeordnet ist. An dem Oberbau kann ferner ein Unterbau mit einer als Stampffuß ausgebildeten Bodenkontakteinrichtung verstellbar angeordnet sein. Die Schwingungserregungseinrichtung kann in diesem Fall insbesondere als Kurbeltrieb ausgebildet sein. Zur Anordnung des Wärmetauscherfluidspeichers kann es insbesondere vorgesehen sein, dass dieser an der Handführungseinrichtung oder am Oberbau gelagert ist. Ein Elektromotor, insbesondere zum Antrieb des Kurbeltriebs, kann insbesondere am Oberbau angeordnet sein. Ein elektrischer Energiespeicher kann insbesondere an der Handführungseinrichtung und/oder am Oberbau positioniert sein.

Alternativ kann die Bodenverdichtungsmaschine auch als Rüttelplatte ausgebildet sein. Für die Rüttelplatte kann es vorgesehen sein, dass diese eine in Form einer Verdichtungsplatte ausgebildete Bodenkontakteinrichtung aufweist. Auf dieser kann die Schwingungserregungseinrichtung angebracht sein, insbesondere in Form eines oder mehrerer Unwuchterreger. Der oder die, vorzugsweise als Elektromotor ausgebildeten, Antriebe des oder der Unwuchterreger können direkt auf einer Oberseite der Verdichtungsplatte oder auf einem mit der Verdichtungsplatte über Schwingungsdämpfungselemente verbundenen und oberhalb der Verdichtungsplatte angeordneten Oberbau angeordnet sein. Der Oberbau kann ergänzend oder alternativ weitere Komponenten der Rüttelplatte, wie beispielsweise einen oder mehrere Energiespeicher, einen oder mehrere Stromrichter, eine Handführungseinrichtung, wie beispielsweise einen Führungsbügel oder eine Führungsdeichsel, tragen. Der Wärmetauscherfluidspeicher kann auf der Verdichtungsplatte, dem Oberbau oder an der Handführungseinrichtung angeordnet sein. Bei der Rüttelplatte kann es sich um eine vorwärtslaufende oder auch um eine reversierbare Rüttelplatte handeln.

Die Bodenverdichtungsmaschine kann ferner als eine Grabenwalze ausgebildet sein. Der Maschinenrahmen der Grabenwalze kann insbesondere als ein knickgelenkter Maschinenrahmen mit einem Vorderwagen und mit einem Hinterwagen ausgebildet sein, die über eine Knickgelenkeinrichtung miteinander verbunden sind. Die Grabenwalze kann zwei oder mehr in eine Arbeitsrichtung gesehen hintereinander angeordnete Walzbandagen umfassen. Die Schwingungserregungseinrichtung kann einen oder mehrere Unwuchterreger aufweisen. Insbesondere kann jeder der Walzbandagen wenigstens ein Unwuchterreger zugeordnet sein. Die Grabenwalze kann ein elektromotorisches oder ein elektrohydraulisches Antriebssystem aufweisen. Sie kann neben einem oder mehreren Elektromotoren einen oder mehrere elektrische Energiespeicher sowie einen oder mehrere Stromrichter als elektrische Betriebskomponenten aufweisen. Der Wärmetauscherfluidspeicher kann vorzugsweise an dem Maschinenrahmen gelagert sein.

Schließlich kann es sich bei der Bodenverdichtungsmaschine um eine, insbesondere handgeführte, Walze, auch Doppelvibrationswalze, handeln. Die Walze umfasst einen Maschinenrahmen, an dem eine oder mehrere Walzbandagen gelagert sein können. Die Schwingungserregungseinrichtung kann einen oder mehrere Unwuchterreger aufweisen. Insbesondere kann jeder der Walzbandagen wenigstens ein Unwuchterreger zugeordnet sein. Die Walze kann ein elektromotorisches oder ein elektrohydraulisches Antriebssystem aufweisen. Sie kann neben einem oder mehreren Elektromotoren einen oder mehrere elektrische Energiespeicher sowie einen oder mehrere Stromrichter als elektrische Betriebskomponenten aufweisen. Der Wärmetauscherfluidspeicher kann vorzugsweise an dem Maschinenrahmen gelagert sein. Sie kann als eine handgeführte Walze mit einer, insbesondere am Maschinenrahmen angelenkten, Handführungseinrichtung ausgebildet sein.

Idealerweise handelt es sich bei der Bodenverdichtungsmaschine um eine handgeführte Bodenverdichtungsmaschine mit einer Handführungseinrichtung. Sie kann ergänzend oder alternativ ferngesteuert oder autonom fahrend/arbeitend ausgebildet sein.

Hinsichtlich der konkreten Ausbildung der Bodenverdichtungsmaschine bestehen verschiedene bevorzugte Alternativen. Insbesondere handelt es sich bei der Bodenverdichtungsmaschine um eine, ganz besonders ausschließlich, elektromotorisch angetriebene Bodenverdichtungsmaschine.

Ein weiterer Aspekt der Erfindung betrifft ein Verfahren zum Betrieb einer Bodenverdichtungsmaschine, insbesondere einer erfindungsgemäßen Bodenverdichtungsmaschine, wie vorstehend beschrieben. Insbesondere kann die Bodenverdichtungsmaschine zumindest einen Maschinenrahmen, eine bewegbar an dem Maschinenrahmen gelagerte Bodenkontakteinrichtung, eine Schwingungserregungseinrichtung, die die Bodenkontakteinrichtung in einem Verdichtungsbetrieb in eine schwingende und/oder stampfende Bewegung versetzt, und eine ein Gehäuse umfassende elektrische Betriebskomponente umfassen. Zu diesen einzelnen möglichen Komponenten der Bodenverdichtungsmaschine wird ergänzend auf die vorhergehenden Angaben zur erfindungsgemäßen Bodenverdichtungsmaschine Bezug genommen, die in entsprechender Weise auch bei einer für die Durchführung des erfindungsgemäßen Verfahrens vorgesehenen Bodenverdichtungsmaschine verwendet werden können.

Wesentlich für das erfindungsgemäße Verfahren kann es sein, dass während des Verdichtungsbetriebes der Bodenverdichtungsmaschine ein, insbesondere ausschließlich, konduktives Übertragen von Wärme bzw. Wärmeenergie zwischen dem Wärmetauscherfluid und der elektrischen Betriebskomponente innerhalb eines Wärmetauscherfluidtanks erfolgt. Hinsichtlich einer möglichen Ausbildung des Wärmetauscherfluidtanks an sich wird ebenfalls an dieser Stelle auf die vorhergehenden Angaben Bezug genommen. Im Unterschied zu konventionellen Kühlfluidkühlungen wird das Wärmetauscherfluid somit nicht kontinuierlich an der elektrischen Betriebskomponente vorbeigeführt und dadurch Wärmeenergie abtransportiert oder zugeführt. Die elektrische Betriebskomponente wird vielmehr in das Wärmetauscherfluid wenigstens teilweise eingetaucht und damit von dem Wärmetauscherfluid lediglich ummantelt, insbesondere in Form eines stehenden, vom Speicherraum bevorrateten Fluidvolumens, und nicht umströmt.

Es ist möglich, dass die elektrische Betriebskomponente derart innerhalb des Wärmetauscherfluidtanks angeordnet ist, dass das Wärmetauscherfluid das Gehäuse der elektrischen Betriebskomponente unmittelbar benetzt, so dass Wärme vom Gehäuse direkt in das Wärmetauscherfluid übertragen wird. In diesem Fall erfolgt der Wärmeaustausch somit unmittelbar zwischen dem Gehäuse der elektrischen Betriebskomponente und dem Wärmetauscherfluid innerhalb des Wärmetauscherfluidtanks.

Es kann vorteilhaft sein, wenn im Betrieb der Bodenverdichtungsmaschine ein vollständiges Bevorraten des Wärmetauscherfluids im Speicherraum des Wärmetauscherfluidtanks erfolgt. Mit anderen Worten ist es vorgesehen, dass kein Austausch von Wärmetauscherfluid des Wärmetauscherfluidtanks aus dem Speicherraum heraus und/oder in den Speicherraum hinein zu Kühl- und/oder Aufwärmzwecken während des Verdichtungsbetriebs der Bodenverdichtungsmaschine erfolgt.

Es ist vorgesehen, dass das Wärmetauscherfluid gleichzeitig als Verbrauchsfluid für den laufenden Arbeitsprozess der Baumaschine genutzt wird, konkret als Berieselungsfluid. In diesem Fall erfolgt somit im Betrieb der Bodenverdichtungsmaschine ein Verbrauchen von Wärmetauscherfluid durch die Berieselungseinrichtung.

Die Erfindung wird nachstehend anhand der in den Figuren gezeigten Ausführungsbeispiele näher erläutert. Es zeigen schematisch:
- Fig. 1: eine Seitenansicht auf eine Bodenverdichtungsmaschine vom Typ Vibrationsstampfer;
- Fig. 2: eine Teilschnittansicht auf den Vibrationsstampfer aus der Fig. 1;
- Fig. 3: eine Seitenansicht auf eine Bodenverdichtungsmaschine vom Typ Rüttelplatte;
- Fig. 4: eine Seitenansicht auf eine Bodenverdichtungsmaschine vom Typ Grabenwalze;
- Fig. 5: eine Seitenansicht auf eine Bodenverdichtungsmaschine vom Typ Walze;
- Fig. 6: eine Querschnittsansicht durch einen Wärmetauscherfluidtank in einer ersten Ausführungsform;
- Fig. 7: eine Querschnittsansicht durch einen Wärmetauscherfluidtank in einer zweiten Ausführungsform;
- Fig. 8: eine Querschnittsansicht durch einen Wärmetauscherfluidtank in einer dritten Ausführungsform;
- Fig. 9: eine Querschnittsansicht durch einen Wärmetauscherfluidtank in einer vierten Ausführungsform;
- Fig. 10: eine Querschnittsansicht durch einen Wärmetauscherfluidtank in einer fünften Ausführungsform;
- Fig. 11: eine Querschnittsansicht durch einen Wärmetauscherfluidtank in einer sechsten Ausführungsform;
- Fig. 12: eine Querschnittsansicht durch einen Wärmetauscherfluidtank in einer siebten Ausführungsform mit einem ersten Adapterstück;
- Fig. 13: eine Querschnittsansicht durch den Wärmetauscherfluidtank der siebten Ausführungsform mit einem zweiten Adapterstück;
- Fig. 14: eine Querschnittsansicht durch einen Wärmetauscherfluidtank in einer achten Ausführungsform mit einem ersten Adapterstück;
- Fig. 15: eine Querschnittsansicht durch einen Wärmetauscherfluidtank in einer neunten Ausführungsform mit einem ersten Adapterstück;
- Fig. 16: eine Querschnittsansicht durch einen Wärmetauscherfluidtank in einer zehnten Ausführungsform mit einem ersten Adapterstück; und
- Fig. 17: ein Ablaufdiagramm eines Verfahrens.

Gleiche beziehungsweise gleich wirkende Bauteile sind in den Figuren mit den gleichen Bezugszeichen bezeichnet. Sich wiederholende Bauteile sind nicht notwendigerweise in jeder Figur gesondert bezeichnet. Ferner sind Merkmale einzelner Ausführungsbeispiele mit Merkmalen anderer Ausführungsbeispiele kombinierbar, sofern dies technisch sinnvoll ist.

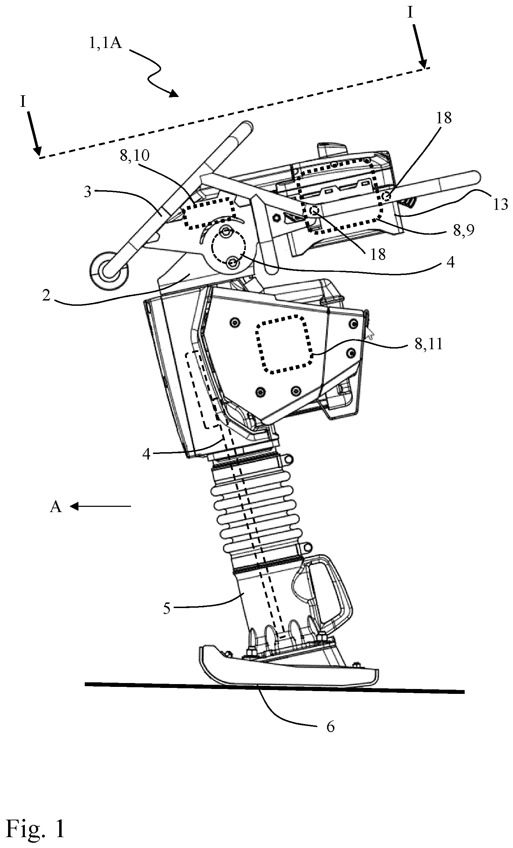

Eine Bodenverdichtungsmaschine 1, konkret vom Typ Vibrationsstampfer 1A, ist in Fig. 1 in einer Seitenansicht gezeigt. Die Bodenverdichtungsmaschine 1 kann einen den Oberbau der Bodenverdichtungsmaschine 1 bildenden Maschinenrahmen 2 aufweisen. An diesem kann eine Handführungseinrichtung 3, konkret beispielsweise in Form eines Führungsbügels, über Schwingungsdämpfungselemente 4 angelenkt sein. Die Bodenverdichtungsmaschine 1 kann ferner einen Unterbau 5 mit einer als Stampffuß ausgebildeten Bodenkontakteinrichtung 6 aufweisen. Ferner kann sie eine Schwingungserregungseinrichtung 7 (in diesem Ausführungsbeispiel in Form eines lediglich angedeuteten Kurbeltriebs) umfassen. Die Bodenverdichtungsmaschine kann eine oder mehrere elektrische Betriebskomponenten 8 aufweisen. Bei diesen elektrischen Betriebskomponenten 8 kann es sich beispielweise um einen elektrischen Energiespeicher 9, einen Stromrichter 10 und/oder einen Elektromotor 11 handeln. Diese elektrischen Betriebskomponenten 8 können gemeinsam einen elektrischen Antriebsstrang bilden, insbesondere zum Antrieb der Schwingungserregungseinrichtung 7.

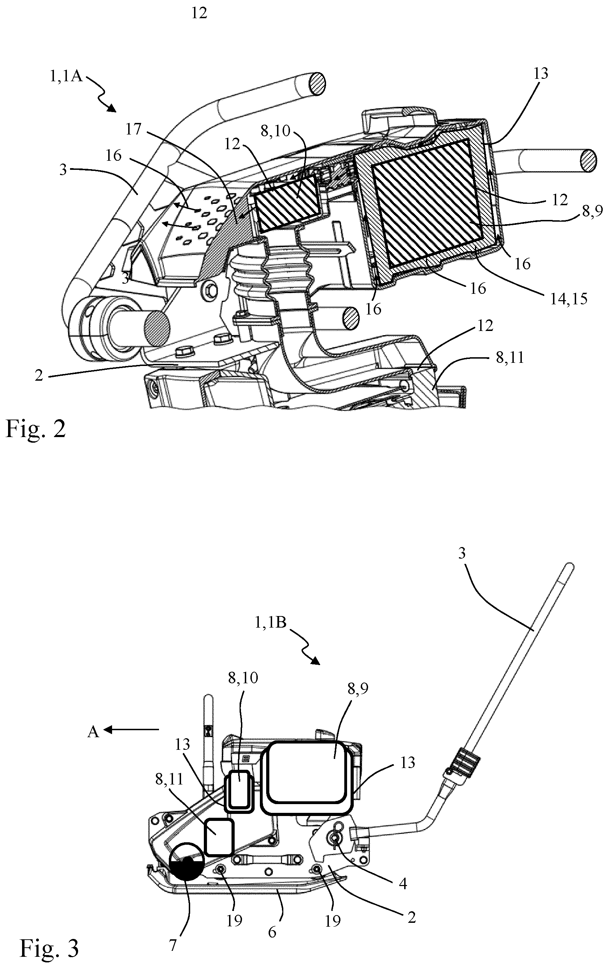

Fig. 2 veranschaulicht in einer Querschnittsansicht entlang einer in Vorwärtsrichtung A der Bodenverdichtungsmaschine 1 und in Vertikalrichtung verlaufenden Schnittebene I-I aus der Fig. 1 ungefähr durch die Mitte des oberen Teiles der Bodenverdichtungsmaschine 1 weitere mögliche Ausführungsdetails. Die elektrischen Betriebskomponenten 8 können jeweils ein Gehäuse 12 umfassen. Es versteht sich, dass sich die einzelnen Gehäuse 12 untereinander insbesondere hinsichtlich ihrer Form unterscheiden können.

Im Betrieb der Bodenverdichtungsmaschine 1 können die einzelnen elektrischen Betriebskomponenten 8, beispielsweise beim Liefern, Umsetzen und/oder Verbrauchen elektrischer Energie, Wärme entwickeln. Um beispielsweise die Wärmebelastung einer oder mehrerer der elektrischen Betriebskomponenten 8 zu mindern, kann es vorgesehen sein, dass die Bodenverdichtungsmaschine 1 einen oder mehrere Wärmetauscherfluidtanks 13 umfasst. Der Wärmetauscherfluidtank 13 kann einen Speicherraum 14 aufweisen, in dem Wärmetauscherfluid 15 bevorratet ist. Über eine Wärmeaustauschfläche 16, die beispielsweise unmittelbar von dem Gehäuse 12 der elektrischen Betriebskomponente 8 gebildet werden kann, kann Wärmeenergie direkt zwischen der elektrischen Betriebskomponente 8 und dem Wärmetauscherfluid 15 per konduktivem Wärmeaustausch ausgetauscht werden. Dazu kann die elektrische Betriebskomponente 8 im vorliegenden Ausführungsbeispiel beispielsweise praktisch vollständig in das Wärmetauscherfluid 15 innerhalb der Speicherraums 14 eintauchen. Das Wärmetauscherfluid 15 kann dabei das Gehäuse 21 der elektrischen Betriebskomponente 8 wenigstens teilweise unmittelbar benetzen.

Der Speicherraum 14 des Wärmetauscherfluidtanks 13 kann insbesondere als ein geschlossener Aufnahmeraum ausgebildet sein, in dem das Wärmetauscherfluid 15 ohne Austausch von Wärmetauscherfluid während eines Verdichtungsbetriebs der Bodenverdichtungsmaschine 1 bevorratet ist. Dies bedeutet, dass das Wärmetauscherfluid 15 als eine Art stehendes Fluidvolumen bevorratet wird, das nicht in einen umlaufenden Kühlkreislauf integriert ist. Die Wärmeaufnahmekapazität des innerhalb des Speicherraums 14 bevorrateten Wärmetauscherfluids 15 ist daher auch vergleichsweise limitiert, für den vorliegenden Anwendungsfall aber auch ausreichend. Allerdings lässt beispielsweise bei einer Wärmeentwicklung der als elektrischer Energiespeicher 9 ausgebildeten elektrischen Betriebskomponente 8 die Effizienz der Wärmeenergieübertragung vom elektrischen Energiespeicher 9 über die Wärmeaustauschfläche 16 des Gehäuses 12 der elektrischen Betriebskomponente 8 mit steigender Erwärmung des Wärmetauscherfluids 15 nach, da das Wärmetauscherfluid 15 gerade nicht in einem extern zum Wärmetauscherfluidtank 13 verlaufendem Kühlkreislauf aktiv gekühlt und dem Speicherraum 14 wieder zugeführt wird. Im Lichte üblicherweise auftretender Betriebsintervalle einer Bodenverdichtungsmaschine 1 der vorliegenden Art ist dies allerdings hinnehmbar.

Es kann jedoch vorgesehen sein, dass der Wärmetauscherfluidtank 13 auf seiner Außenseite mithilfe einer Kühllufteinrichtung 17 zusätzlich gekühlt wird. Diese kann beispielsweise derart ausgebildet sein, dass sie eine Luftströmung 16 an der Außenseite des Wärmetauscherfluidtanks 13 erzeugt. Die Kühllufteinrichtung 17 kann eine oder mehrere in den Figuren nicht näher gezeigte Luftfördereinrichtungen, beispielsweise ein Sauggebläse, und/oder eine Kühlluftführung, beispielsweise in Form von einem oder mehreren Luftführungskanälen, umfassen. Wesentlich ist allerdings, dass das innerhalb des Wärmetauscherfluidtanks 13 befindliche Wärmetauscherfluid 15 nicht aus dem Speicherraum 14 zu Kühlzwecken entfernt wird.

Bei dem Wärmetauscherfluid 15 kann es sich insbesondere um eine Flüssigkeit oder ein Flüssigkeitsgemisch handeln. Dies kann insbesondere bedeuten, dass es sich bei dem Wärmetauscherfluid 15 um ein Fluid handeln kann, das wenigstens in einem Temperaturbereich von größer |0 °C bis 90 °C, ganz besonders wenigstens in einem Temperaturbereich von -20 °C bis 90 °C, in einem flüssigen Aggregatzustand vorliegt. Das Wärmetauscherfluid 15 kann beispielsweise Wasser, ein Wasser-Glykol-Gemisch, Öl oder eine andere dielektrische Flüssigkeit und/oder ein Gemisch davon sein.

Es ist möglich, dass der Wärmetauscherfluidtank 13 über Schwingungsdämpfungselemente 18 schwingungsgedämpft gegenüber der Handführungseinrichtung 3 an dieser angeordnet ist. Bei einer Anordnung des Wärmetauscherfluidtanks 13 an dem Maschinenrahmen 2 der Bodenverdichtungsmaschine 1 kann dieser über Schwingungsdämpfungselemente 18 schwingungsgedämpft gegenüber dem Maschinenrahmen 2 sein (Fig. 1).

Fig. 3 zeigt eine Bodenverdichtungsmaschine 1 vom Typ Rüttelplatte 1B. Ein wesentlicher Unterschied zu der als Vibrationsstampfer ausgebildeten Bodenverdichtungsmaschine 1 gemäß Fig. 1 besteht darin, dass die Schwingungserregungseinrichtung 7 als ein oder mehrere Unwuchterreger ausgebildet sein kann. Die einen Unterbau der Bodenverdichtungsmaschine 1 bildende Bodenkontakteinrichtung 6 kann in diesem Fall als Grundplatte ausgebildet sein, auf der der oder die Unwuchterreger der Schwingungserregungseinrichtung 7 unmittelbar befestigt sein können. Die Grundplatte kann über Schwingungsdämpfungselemente 19 mit dem als Maschinenrahmen 2 ausgebildeten Oberbau der Bodenverdichtungsmaschine 1 verbunden sein. Ferner kann die Bodenverdichtungsmaschine einen über Schwingungsdämpfungselemente 4 mit dem Maschinenrahmen 2 verbundene Handführungseinrichtung 3 in Form eines Führungsbügels aufweisen.

Auch die Bodenverdichtungsmaschine 1 gemäß Fig. 3 kann eine oder mehrere elektrische Betriebskomponenten 8 aufweisen. So können beispielsweise ein oder mehrere elektrische Energiespeicher 9 vorhanden sein. Derartige elektrische Betriebskomponenten 8 können an der Handführungseinrichtung 3 und/oder dem Maschinenrahmen 2 und/oder der Bodenkontakteinrichtung 6 angeordnet sein. Ergänzend oder alternativ kann es vorgesehen sein, dass die Bodenverdichtungsmaschine 1 ein oder mehrere Stromrichter 10 als elektrische Betriebskomponenten 8 umfasst. Diese können ebenfalls an der Handführungseinrichtung 3 und/oder dem Maschinenrahmen 2 und/oder der Bodenkontakteinrichtung 6 angeordnet sein. Weiter ergänzend oder alternativ kann es auch vorgesehen sein, dass die Bodenverdichtungsmaschine 1 vom Typ Rüttelplatte einen oder mehrere Unwuchterreger umfasst, die zusammen die Schwingungserregungseinrichtung 7 bilden können. Dieser kann bzw. diese können insbesondere direkt an der Bodenkontakteinrichtung 6 angeordnet sein und von einer als Elektromotor 11 ausgebildeten elektrischen Betriebskomponente 8 angetrieben werden. Es ist möglich, den oder die Unwuchterreger indirekt durch einen oder mehrere Elektromotoren 11 anzutreiben, beispielsweise unter Zwischenschaltung eines Zugmittelgetriebes. Es kann aber auch vorgesehen sein, dass der oder die Unwuchterreger direkt von einem oder mehrere Elektromotoren 11 angetrieben werden. Es kann vorgesehen sein, dass der oder die Elektromotoren 11 direkt auf der Bodenkontakteinrichtung angeordnet bzw. gelagert sein.

Das Ausführungsbeispiel gemäß der Fig. 3 verdeutlicht, dass die Bodenverdichtungsmaschine 1 nicht nur einen Wärmetauscherfluidtank 13 aufweisen kann, sondern auch Ausführungsformen von der Erfindung umfasst sind, die gleichzeitig mehrere Wärmetauscherfluidtanks 13 umfassen. Eine der wenigstens teilweise innerhalb eines Wärmetauscherfluidtanks 13 angeordneten Betriebskomponenten 8 kann beispielsweise der elektrische Energiespeicher 9 sein. Ergänzend oder alternativ kann es jedoch auch vorgesehen sein, dass eine als Stromrichter 10 ausgebildete elektrische Betriebskomponente in einem Wärmetauscherfluidtank 13 angeordnet ist. Sofern beide dieser elektrischen Betriebskomponenten 8 jeweils in einem Wärmetauscherfluidtank 13 angeordnet sein sollen, ist es möglich, wie in der Fig. 3 gezeigt, für jede der elektrischen Betriebskomponenten 8 jeweils einen eigenen Wärmetauscherfluidtank 13 an der Bodenverdichtungsmaschine 1 vorzusehen. Diese können beispielsweise beide an dem Maschinenrahmen 2 gelagert sein. Alternativ kann es aber auch vorgesehen sein, dass ein gemeinsamer Wärmetauscherfluidtank 13 von der Bodenverdichtungsmaschine 1 umfasst ist, in dessen Speicherraum 14 die wenigstens zwei oder mehr elektrischen Betriebskomponenten 8 gemeinsam hineinragen bzw. in dessen Speicherraum 14 sie gemeinsam positioniert sind.

Auch bei der als Rüttelplatte 1B ausgebildeten Bodenverdichtungsmaschine 1 gemäß der Fig. 3 kann es sich ganz besondere um eine rein mithilfe elektrischer Energie angetriebene Bodenverdichtungsmaschine 1 handeln.

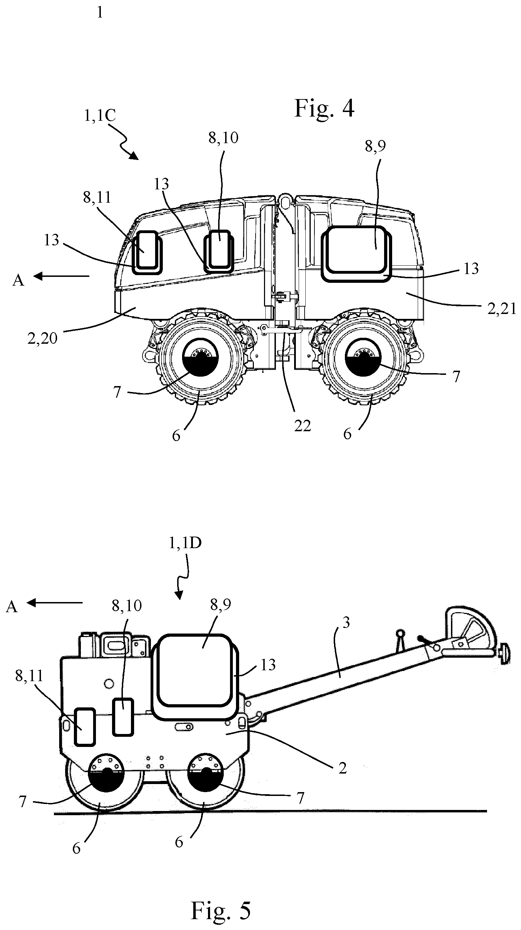

Fig. 4 veranschaulicht in einer Seitenansicht mögliche Merkmale einer als Grabenwalze 1C ausgebildeten Bodenverdichtungsmaschine 1. Anders als bei den beiden vorhergehenden Ausführungsbeispielen einer Bodenverdichtungsmaschine 1 ist die Bodenkontakteinrichtung 6 in diesem Fall in Form mehrerer trommelförmiger Walzbandagen ausgebildet, die im Fahr- und Verdichtungsbetrieb auf dem Bodenuntergrund abrollen. Im Inneren diese Walzbandagen können eine oder mehrere, insbesondere als Unwuchterreger ausgebildete, Schwingungserregungseinrichtungen 7 angeordnet sein. Der Maschinenrahmen 2 kann als knickgelenkter Maschinenrahmen 2 ausgebildet sein, umfassend einen Vorderwagen 20 und einen Hinterwagen 21, die über eine Knickgelenkeinrichtung 22 miteinander verbunden sind.

Es können mehrere der elektrischen Betriebskomponenten 8, insbesondere eine oder mehrere elektrische Energiespeicher 9, ein oder mehrere Stromrichter 10 und/oder ein oder mehrere Elektromotoren 11, gemeinsam an dem Vorderwagen 20 und/oder an dem Hinterwagen 21 gelagert sein.

Die Bodenverdichtungsmaschine 1 kann, insbesondere im Fall der Ausbildung als Grabenwalze 1C, ein vollelektrisches oder ein elektrohydraulisches Antriebssystem aufweisen.

Fig. 5 schließlich veranschaulicht eine Bodenverdichtungsmaschine 1vom Typ Walze 1D, konkret eine handgeführte Doppelvibrationswalze. Die Handführungseinrichtung 3 kann bei einer Bodenverdichtungsmaschine 1 somit auch als Führungsdeichsel ausgebildet sein.

Insbesondere für die Bodenverdichtungsmaschine 1, deren Bodenkontakteinrichtung 6 auf dem Bodenuntergrund U abrollt, kann es vorgesehen sein, dass sie einen oder mehrere Elektromotoren 11 umfassen können, die als Fahrantriebsmotoren und/oder als Antriebsmotoren der Schwingungserregungseinrichtung 7 ausgebildet sind.

Alle der in den Figuren 1 bis 5 näher veranschaulichten Bodenverdichtungsmaschinen 1 können insbesondere als handgeführte und/oder semi-autonom und/oder autonom arbeitende Bodenverdichtungsmaschinen 1 ausgebildet sein.

Einzelne oder mehrere Merkmale der jeweiligen Ausführungsformen der Bodenverdichtungsmaschinen 1 aus den Figuren 1 bis 5 können auch untereinander miteinander kombiniert werden, sofern dies die Art des Verdichtungsarbeitsprozesses des jeweiligen Typs an Bodenverdichtungsmaschine 1 zulässt.

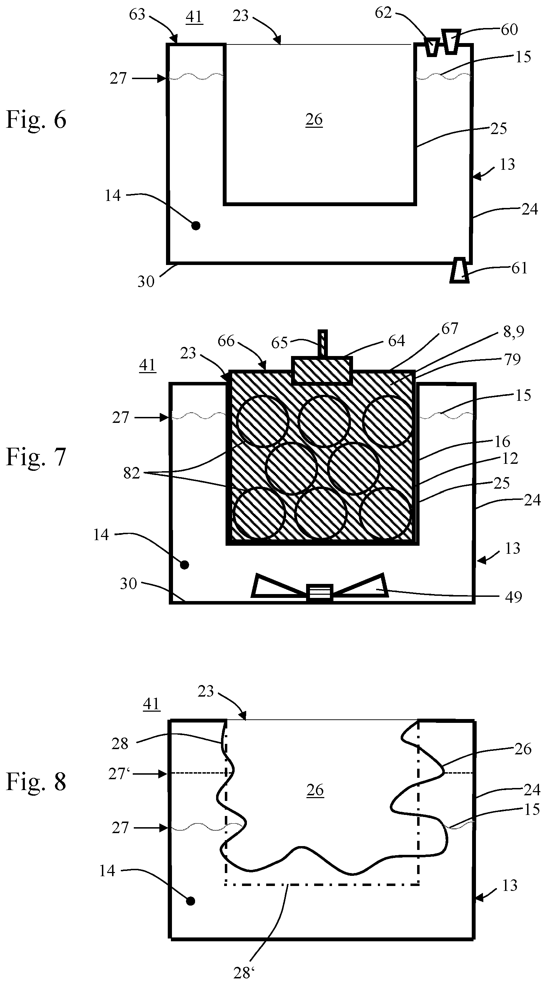

Die Figuren 6 bis 16 veranschaulichen verschiedene Ausführungsformen des Wärmetauscherfluidtanks 13 und/oder der jeweiligen elektrischen Betriebskomponente 8. Bei den in den Figuren 6 bis 16 angegebenen elektrischen Betriebskomponenten 8 kann es sich um einen oder mehrere elektrische Energiespeicher 9 und/oder Stromrichter 10 und/oder Elektromotoren 11 handeln. Der Energiespeicher 9 kann eine oder mehrere Energiespeicherelemente 82 bzw. -zellen aufweisen, wie beispielhaft in der Fig. 7 angegeben.

Sämtliche der in den Ausführungsbeispielen veranschaulichten Ausführungsformen des Wärmetauscherfluidtanks 13 umfassen einen von Tankaußenwänden 24 wenigstens teilweise umgebenen Speicherraum 14, in dem Wärmetauscherfluid 15 gehalten wird (in den Figuren 6 bis 16 ist hierzu die obere Fluidstandkante mit 15 bezeichnet; bis dahin ist der Speicherraum 14 in den einzelnen Ausführungsbeispielen somit beispielsweise mit Wärmetauscherfluid 15 gefüllt). Die Tankwände können eine Art trogartiges Behältervolumen bilden, das eine in Vertikalrichtung 84 nach oben zur Außenumgebung 41 hin geöffnete Aufnahmeöffnung 23 aufweisen kann.

Teil des Wärmetauscherfluidtanks 13 ist ferner ein Aufnahmeraum 26 im Inneren des Wärmetauscherfluidtanks 13, wie er beispielsweise in den Figuren 6 und 8 angegeben ist, in denen keine elektrische Betriebskomponente 8 in den Wärmetauscherfluidtank 13 eingesetzt ist. Dieser kann über die Aufnahmeöffnung 23 von außerhalb des Wärmetauscherfluidtanks 13 zugänglich sein, insbesondere zum Einbringen und/oder Entfernen der jeweiligen elektrischen Betriebskomponente 8.

Alle der gezeigten Ausführungsbeispiele weisen zumindest dann, wenn die elektrische Betriebskomponente 8 wenigstens teilweise in den Speicherraum 14 hineinragt, wenigstens eine Wärmeaustauschfläche 16 auf, über die Wärme konduktiv zwischen der elektrischen Betriebskomponente 8 und dem Wärmetauscherfluid 15 innerhalb des Speicherraums 14 ausgetauscht werden kann.

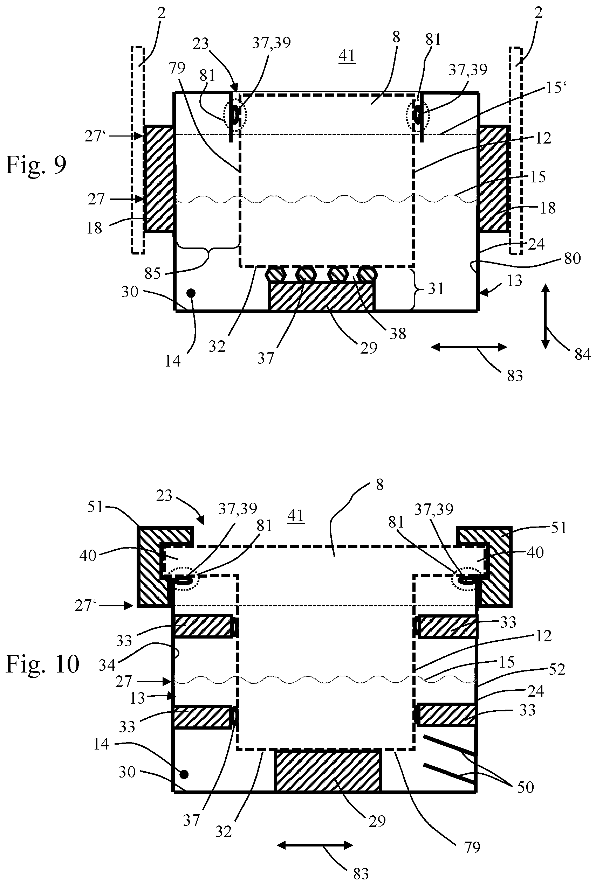

Zur Ausgestaltung der Wärmeaustauschfläche 16 sind beispielsweise zwei Varianten möglich und von der Erfindung mit umfasst. So betreffen die in den Figuren 6 bis 8 erläuterten Ausführungsbeispiele Varianten, bei denen ein oder mehrere Innenwände 25 des Wärmetauscherfluidtanks 13 selbst einen Teil der Wärmeaustauschfläche 16 zusammen mit dem Gehäuse 12 der elektrischen Betriebskomponente 8 bilden. Bei diesen Varianten erfolgt der konduktive Wärmeaustausch zwischen der elektrischen Betriebskomponente 8 und dem Wärmetauscherfluid 15 somit über das Gehäuse der elektrischen Betriebskomponente 8 und dem von dem Wärmetauscherfluidtank 13 gebildeten Teil der Wärmeaustauschfläche 16. Bei den Ausführungsformen der Figuren 9 bis 16 benetzt das Wärmetauscherfluid 15 dagegen das Gehäuse 12 der elektrischen Betriebskomponente direkt, so dass der konduktive Wärmeaustausch zwischen der elektrischen Betriebskomponente 8 und dem Wärmetauscherfluid 15 über das Gehäuse 12 der elektrischen Betriebskomponente konduktiv direkt zum Wärmetauscherfluid 15 erfolgen kann.

Fig. 6 erläutert weitere mögliche Ausführungsdetails eines Wärmetauscherfluidtanks 13. So kann der Aufnahmeraum 26 von formstabilen Tankinnenwänden 25 gebildet werden. Diese können idealerweise derart ausgebildet sein, dass die dreidimensionale und dem Aufnahmeraum 26 zugewandte Außenoberfläche der Tankinnenwände 25 komplementär zur Gegenanlagefläche durch die elektrische Betriebskomponente 8 ausgebildet ist, um das Auftreten eines Luftspaltes zwischen der Außenmantelfläche des Gehäuses 12 der elektrischen Betriebskomponente 8 und den Tankinnenwänden 25 möglichst auszuschließen oder lokal möglichst gering zu halten, damit ein konduktiver Wärmeaustausch zwischen der elektrischen Betriebskomponente 8 und dem Wärmetauscherfluid 15 möglichst wenig durch eine bereichsweise auftretende Luftschicht unterbrochen wird.

Der durch die Tankinnenwände 25 von dem Aufnahmeraum 26 getrennte Speicherraum 14 ist bis zu einem Füllstand 27 mit dem Wärmetauscherfluid 15 gefüllt. In Fig. 7 ist eine elektrische Betriebskomponente 8, beispielsweise in Form eines elektrischen Energiespeichers 9, in den Aufnahmeraum 26 eingesetzt. Entwickelt die elektrische Betriebskomponente 8 im laufenden Betrieb der Bodenverdichtungsmaschine 1 Wärme, kann diese mittels konduktiver Wärmeübertragung durch das Gehäuse 12 der elektrischen Betriebskomponente und durch die Tankinnenwand 25 hindurch an das Wärmetauscherfluid 15 abgegeben werden. Genauso ist auch umgekehrt eine Übertragung von Wärmeenergie vom Wärmetauscherfluid 15 auf die elektrische Betriebskomponente 8 möglich.

Fig. 8 veranschaulicht ein Ausführungsbeispiel des Wärmetauscherfluidtanks 13, bei dem die Tankinnenwand 25 bzw. die Trennwand zum Aufnahmeraum 26 durch eine, insbesondere gegenüber dem Wärmetauscherfluid 15 fluiddichte, Kontaktmembran 28 aus einem flexiblen Membranmaterial begrenzt wird. Wird nun die elektrische Betriebskomponente in den Aufnahmeraum 26 durch die Aufnahmeöffnung 23 hindurch eingebracht, schmiegt sich die Kontaktmembran 28 an die Außenoberfläche 79 des Gehäuses 12 der elektrischen Betriebskomponente 8 an, wie es in der Fig. 8 durch die gestichelte Linie 28' veranschaulicht ist. Ein Wärmeaustausch zwischen der elektrischen Betriebskomponente und dem Wärmetauscherfluid 15 erfolgt bei diesem Ausführungsbeispiel somit mittels sukzessiver konduktiver Wärmeübertragung durch das Gehäuse 12 der elektrischen Betriebskomponente und durch die Kontaktmembran 28 des Wärmetauscherfluidtanks 13 hindurch an das Wärmetauscherfluid 15. Durch das Einsetzen der elektrischen Betriebskomponente 8 kann der Füllstand 27 des Wärmetauscherfluids 15 innerhalb des Wärmetauscherfluidtanks 14 hin zu einem Füllstand 27' steigen.

Bei den in den Ausführungsbeispielen der Figuren 9 bis 16 veranschaulichten Varianten ist es vorgesehen, dass die elektrische Betriebskomponente 8 mit ihrem Gehäuse 12 direkt in das im Speicherraum 14 bevorratete Wärmetauscherfluid 15 wenigstens teilweise eintaucht und somit von diesem unmittelbar benetzt wird. Bei diesen Ausführungsformen erfolgt ein Wärmeaustausch zwischen der elektrischen Betriebskomponente 8 und dem Wärmetauscherfluid 15 somit mittels konduktiver Wärmeübertragung nur durch das Gehäuse 12 der elektrischen Betriebskomponente 8 hindurch an das Wärmetauscherfluid 15. Für diese Ausführungsformen ist jeweils ein Füllstand 27 angegeben, der dem Füllstand des Wärmetauscherfluids 15 innerhalb des Speicherraums 14 entspricht, wenn die elektrische Betriebskomponente aus dem Wärmetauscherfluidtank 13 entfernt worden ist, sowie ein Füllstand 27', der dem Füllstand des Wärmetauscherfluids 15 innerhalb des Speicherraums 14 entspricht, wenn die elektrische Betriebskomponente 8 in den Wärmetauscherfluidtank 13 eingesetzt worden ist.

Insbesondere auch für diese, das Gehäuse 12 direkt benetzenden Ausführungsformen kann es vorgesehen sein, dass im Speicherraum 14 ein oder mehrere Aufstandselemente 29 vorgesehen sind. Diese können in Vertikalrichtung nach oben von einer unteren Bodenwand 30 des Speicherraums 14 vorstehen und als Aufstandsfläche bzw. Einschubbegrenzung für die elektrische Betriebskomponente 8 dienen. Dadurch kann erreicht werden, dass die elektrische Betriebskomponente 8 mit ihrer Bodenwand 32 in einem Abstand 31 in Vertikalrichtung 84 von der Bodenwand 30 des Speicherraums 14 bzw. der Wärmetauscherfluidtanks 13 beabstandet innerhalb des Aufnahmeraums 26 gelagert ist, so dass zumindest wesentliche Teile auch die durch das Gehäuse 12 der elektrischen Betriebskomponente 8 gebildete Bodenwand 32 direkt mit Wärmetauscherfluid 15 benetzt werden kann. Ergänzend oder alternativ kann die elektrische Betriebskomponente 8 mit ihrer seitlichen Außenoberfläche 79 in einem Horizontalabstand 85 in Horizontalrichtung 83 von der Innenoberfläche 80 des Speicherraums 14 bzw. des Wärmetauscherfluidtanks 13 beabstandet sein.

Ergänzend oder alternativ ist es auch möglich, dass im Speicherraum 14 ein oder mehrere Seitenführungselemente 33 vorhanden sind. Dies ist beispielsweise beim Ausführungsbeispiel der Fig. 10 näher veranschaulicht. Bei den Seitenführungselementen 33 kann es sich beispielsweise um von einer Tankseitenwand 34 in das Innere des Speicherraums 14 wenigstens teilweise horizontal hineinragende Vorsprünge oder ähnliches handeln. An diesen kann das Gehäuse 12 der elektrischen Betriebskomponente 8, insbesondere formschlüssig, anliegen und dadurch in seiner Relativlage in Horizontalrichtung 83 relativ zum Wärmetauscherfluidtank 13 stabilisiert werden.

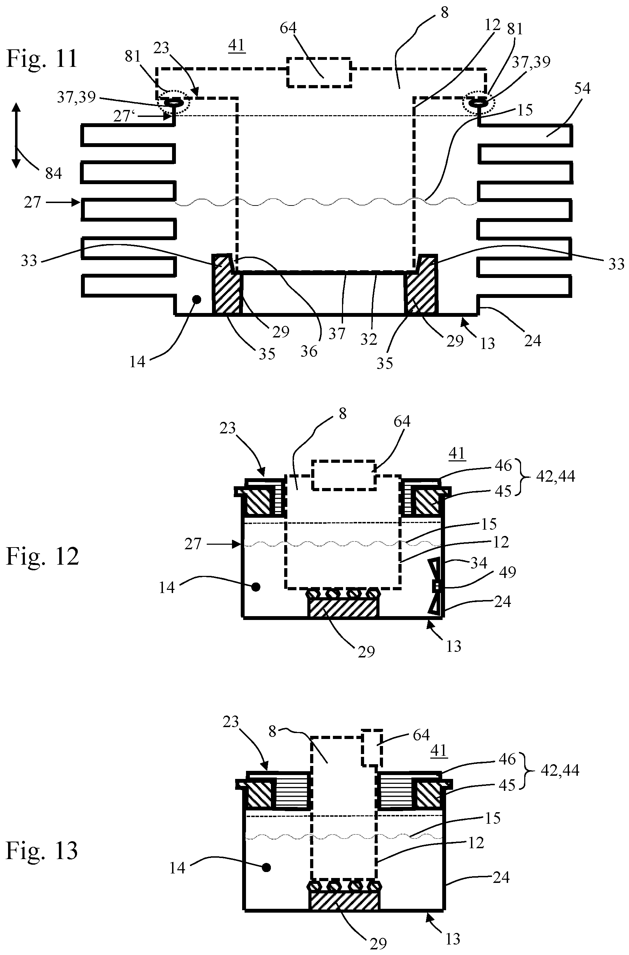

Beim Ausführungsbeispiel gemäß der Fig. 11 ist eine ergänzende oder alternative Ausführungsform der Aufstandselemente 29 und der Seitenführungselemente 33 veranschaulicht. Gemäß Fig. 11 können diese auch als miteinander kombinierte Stabilisierungselemente 35 ausgebildet sein, die gleichzeitig eine Fläche zum Aufsitzen eines Teils der Bodenwand 32 des Gehäuses 12 der elektrischen Betriebskomponente 8 als Teil eines Aufstandselementes 29 sowie davon in Vertikalrichtung 84 aufragende und das Gehäuse 12 der elektrischen Betriebskomponenten 8 auf Höhe einer Seitenwand des Gehäuses 12 wenigstens teilweise umgreifende Seitenwandelemente als Seitenführungselement 33 aufweisen. Die Stabilisierungselemente 35 können ergänzend oder alternativ ferner eine Zentrierhilfe, beispielsweise in Form einer Einlaufschräge 36, umfassen, an der das Gehäuse 12 beim Einsetzen in den Aufnahmeraum 26 entlanggleiten kann und in seine, idealerweise zentrierte, Endlage geführt wird.

Aufgrund der im Betrieb der Bodenverdichtungsmaschine 1 möglicherweise auftretenden Schwingungsbelastungen kann es vorteilhaft sein, den Wärmetauscherfluidtank 13 relativ zur übrigen Bodenverdichtungsmaschine 1 und/oder die elektrische Betriebskomponenten 8 relativ zum Wärmetauscherfluidtank 13 gegenüber einer Übertragung von Schwingungen zu dämpfen. Dazu können beispielsweise Schwingungsdämpfungselemente 18 (Fig. 9) Teil einer schwingungsgedämpften Verbindung des Wärmetauscherfluidtanks 13 zu einem Maschinenrahmen 2 und/oder einer Handführungseinrichtung (in Fig. 9 nicht dargestellt) der Bodenverdichtungsmaschine 1 sein.

Ergänzend oder alternativ können allerdings auch ein oder mehrere Schwingungsdämpfungselemente 37 von der Gesamtheit aus Wärmetauscherfluidtank 13 und elektrischer Betriebskomponente 8 umfasst sein, die eine Schwingungsübertragung zwischen diesen beiden Komponenten dämpfen. Im Ausführungsbeispiel gemäß der Fig. 9 können beispielweise Schwingungsdämpfungselemente 37 in einem trockenen, d.h. vom Wärmetauscherfluid 15 nicht benetzten, Bereich im oberen Randbereich der elektrischen Betriebskomponente 8 und einem nach innen gebogenen Innenrand im Bereich der Aufnahmeöffnung 23 vorhanden sein. Diese dämpfen insbesondere eine Schwingungsübertragung zwischen der elektrischen Betriebskomponente 8 und dem Wärmetauscherfluidtank 15 in eine Horizontalrichtung 83. Ergänzend oder alternativ können ein oder mehrere Schwingungsdämpfungselemente 37 im Bereich zwischen der Bodenwand 32 der elektrischen Betriebskomponente 8 und dem Aufstandselement 29 bzw. deren Aufstandsfläche angeordnet sein. Solche Schwingungsdämpfungselemente 37 können somit insbesondere auch vom Wärmetauscherfluid 15 benetzt sein. Diese Schwingungsdämpfungselemente 37 dämpfen insbesondere eine Schwingungsübertragung zwischen der elektrischen Betriebskomponente 8 und dem Wärmetauscherfluidtank 15 in eine Vertikalrichtung 84. Wie in Fig. 9 veranschaulicht, können die in Vertikalrichtung 84 und die in Horizontalrichtung 83 wirkenden Schwingungsdämpfungselemente 37 auch miteinander kombiniert vorliegen.

Gemäß dem in der Fig. 9 gezeigten Ausführungsbeispiel können die Schwingungsdämpfungselemente 37 als noppen- oder streifenartige Elemente ausgebildet sein, so dass in die dadurch vorhandenen Zwischenräumen 38 Wärmetauscherfluid 15 eintreten und insbesondere beispielsweise die Bodenwand 32 der elektrischen Betriebskomponente 8 für einen optimierten konduktiven Wärmeaustauschvorgang direkt auch im Bereich der Schwingungsdämpfungselemente 37 benetzen kann. Alternativ kann, insbesondere das zur Bodenwand 32 der elektrischen Betriebskomponente 8 hin wirkende, Schwingungsdämpfungselement 37 auch in Form einer Dämpfungsmatte ausgebildet sein, wie beispielsweise im Ausführungsbeispiel gemäß der Fig. 11 gezeigt.

Im Ausführungsbeispiel der Fig. 10 ist eine weitere ergänzende oder alternative Möglichkeit zur Positionierung der Schwingungsdämpfungselemente 37 gezeigt, wonach diese auch innerhalb des Volumens an Wärmetauscherfluid 15 zur Dämpfung einer Schwingungsübertragung in Horizontalrichtung 83 anordenbar sind, beispielsweise auf den der elektrischen Betriebskomponente 8 zugewandten Stirnseiten eines oder mehrerer der Seitenführungselemente 33.

Insbesondere um einem Entweichen von Wärmetauscherfluid 15 aus dem Speicherraum 14 in die Außenumgebung entgegenzuwirken, kann es vorteilhaft sein, wenn der Speicherraum 14, insbesondere auch im Zusammenwirken mit der elektrischen Betriebskomponente 8, zur Außenumgebung hin verschlossen bzw. abgedichtet ist. Dazu kann der Speicherraum 14 insgesamt als zur Außenumgebung hin von Teilen des Wärmetauscherfluidtanks 15 abgeschlossener Hohlraum ausgebildet sein, wie beispielsweise in den Figuren 6 bis 8 veranschaulicht.

Es ist allerdings auch möglich, dass die elektrische Betriebskomponente 8 in einem in den Aufnahmeraum 26 eingebrachten Zustand die Aufnahmeöffnung 23 des Wärmetauscherfluidtanks zur Außenumgebung 41 hin verschließt. Der elektrischen Betriebskomponente 8 kommt bei diesen Ausführungsformen somit eine Doppelfunktion zu, konkret als elektrische Betriebskomponente an sich und als Deckel zum Verschließen der Aufnahmeöffnung 23.

Eine Möglichkeit zum Erhalt dieser Doppelfunktion ist im Ausführungsbeispiel gemäß der Fig. 9 gezeigt. Das Gehäuse 12 der elektrischen Betriebskomponente 8 ist in einem Kopfbereich nahezu komplementär zur Kontur der Aufnahmeöffnung 23 ausgebildet, so dass die Aufnahmeöffnung 23 durch die eingesetzte elektrische Betriebskomponente 8 nahezu vollständig verschlossen wird. Es kann hierfür ergänzend vorgesehen sein, dass in diesen Bereich die bereits beschriebenen Schwingungsdämpfungselemente 37 angeordnet sind, die in diesem Fall zusätzlich als Abdichtelemente 39 wirken können und dazu als beispielsweise O-Ringdichtung ausgebildet sein können.

Ergänzend oder alternativ kann es vorgesehen sein, dass die elektrische Betriebskomponente 8, insbesondere deren Gehäuse 12, einen Anlagekragen 40, insbesondere in Form eines Auflagekragens, aufweist, der insbesondere bei einer Projektion in eine horizontale Referenzebene die Fläche der Aufnahmeöffnung 23 in dieser Projektion wenigstens teilweise und insbesondere vollständig umlaufend überlappt. Dies ist beispielsweise bei den Ausführungsformen der Figuren 10 und 11 der Fall. Im Anlage- bzw. Auflagebereich dieses Anlagekragens 40 an dem Wärmetauscherfluidtank 13 können ebenfalls ein oder mehrere Schwingungsdämpfungselemente 37 und/oder Abdichtelemente 39 vorgesehen sein. Mithilfe der Abdichtelemente 39 kann ein Abdichtbereich 81 (Figuren 9, 10 und 11) bereitgestellt werden, in dem der Speicherraum 14 zur Außenumgebung 41 hin, idealerweise fluiddichtet, abgedichtet ist.

Eine weitere Alternativ zum Verschließen des Speicherraums 14 zur Außenumgebung 41 hin besteht darin, einen zur elektrischen Betriebskomponente separaten Deckel 42 vorzusehen, mit dem beispielsweise die Aufnahmeöffnung 23 verschließbar ist.

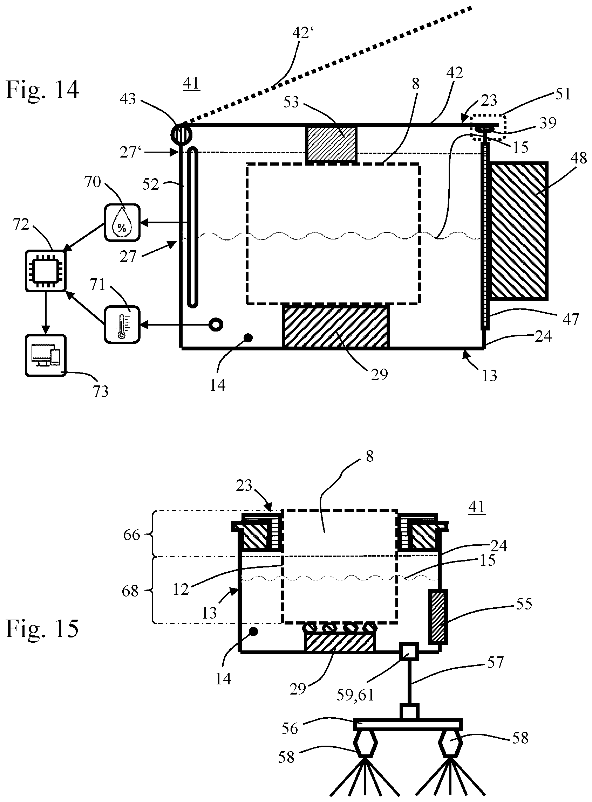

Im Ausführungsbeispiel gemäß der Fig. 14 ist dazu ein Deckel 42 vorgesehen, der zum Abdecken der kompletten Aufnahmeöffnung 23 ausgebildet ist. Der Deckel 42 kann als vollständig von dem Wärmetauscherfluidtank 15 abnehmbares Element ausgebildet sein oder, wie im Ausführungsbeispiel gemäß Fig. 14 gezeigt, über ein Verbindungsgelenk 43, insbesondere ein Schwenkgelenk, mit dem Wärmetauscherfluidtank 15 gelenkig verbunden sein. Die von dem in einer Verschlussstellung befindlichen Deckel 43 (und darüber hinaus) erreichbare Öffnungsstellung ist in der Fig. 14 beispielhaft mit dem Deckel 43' angegeben.

Eine weitere ergänzende oder alternative Möglichkeit zur Nutzung eines Deckels 42 zum Verschließen der Aufnahmeöffnung 23 ist in den Ausführungsbeispielen gemäß den Figuren 12 und 13 gezeigt. Der Wärmetauscherfluidtank 15 ist in den beiden Figuren identisch. Unterschiede bestehen in den Abmessungen der jeweils in den Speicherraum 14 hineinragenden elektrischen Betriebskomponente 8 sowie in der Ausführung des Deckel 42s. In diesem Fall kann der Deckel 42 als Adapterdeckel 44 mit einem Deckelgrundkörper 45 und einem Adapterstück 46 ausgebildet sein. Das Adapterstück 46 ist austauschbar gegenüber dem Deckelgrundkörper 45 und bildet mit diesem zusammen einen Gesamtdeckel. Im Adapterstück 46 ist eine Durchgangsöffnung 47 vorhanden, durch die hindurch die elektrische Betriebskomponente 8 von außerhalb des Aufnahmeraums 26 bis in das im Speicherraum 14 bevorratete Wärmetauscherfluid 15 hineinragt. Gegenüber der elektrischen Betriebskomponente 8 der Fig. 12 ist die elektrische Betriebskomponente 8 in der Fig. 13 beispielsweise schmäler ausgebildet. Dieser Unterschied kann nun durch den selektiven Austausch eines entsprechend an die jeweilige elektrische Betriebskomponente 8 angepassten Adapterstückes 46 ausgeglichen werden.

Um sicherzustellen, dass die elektrische Betriebskomponente 8 und, sofern vorhanden, der Deckel 42 betriebssicher und zuverlässig am und/oder im Wärmetauscherfluidtank 13 positioniert sind, können eine oder mehrere Fixiereinrichtungen 51 vorgesehen sein. Die Fixiereinrichtung 51 kann beispielsweise derart ausgebildet sein, dass sie die elektrische Betriebskomponente 8, insbesondere deren Gehäuse 12, relativ zu insbesondere einem Grundkörper 52 des Wärmetauscherfluidtanks 13 fixiert, beispielsweise in Form eines Spann- und/oder Rast- und/oder Klemmverschlusses, wie er im Ausführungsbeispiel gemäß der Fig. 10 veranschaulicht ist. Ergänzend oder alternativ kann die Fixiereinrichtung 51 auch derart ausgebildet sein, dass sie einen Deckel 42 relativ zu insbesondere einem Grundkörper 52 des Wärmetauscherfluidtanks 13 fixiert, wie beispielsweise beim Ausführungsbeispiel der Fig. 14 angegeben. Auch eine solche Fixiereinrichtung 51 kann in Form eines Spann- und/oder Rast- und/oder Klemmverschlusses ausgebildet sein. Insbesondere in diesem Zusammenhang kann der Deckel 42 und/oder die elektrische Betriebskomponente 8 ein Anpresselement 53, wie beispielsweise ein Element aus einem elastischen Material, aufweisen, das derart zwischen dem Deckel 42 und der elektrischen Betriebskomponente 8 angeordnet ist, dass es eine Anpresskraft von dem Deckel 42 auf die elektrische Betriebskomponente 8 überträgt, wenn der Deckel 42 in seiner Schließstellung von der Fixiereinrichtung 51 gehalten wird.

Die Nutzung des Wärmetauscherfluids 15 zur Abgabe und/oder Aufnahme von Wärmeenergie mittels konduktivem Wärmetransportes muss nicht auf die wenigstens teilweise innerhalb des Aufnahmeraums 26 angeordnete elektrische Betriebskomponente 8 beschränkt sein, sondern kann auch auf außerhalb des Aufnahmeraums 26 angeordnete Elemente ausgeweitet werden. Dazu kann es insbesondere vorgesehen sein, dass der Wärmetauscherfluidtank 13 einen Anlagebereich 47 auf seiner Tankaußenwand 24 aufweist, wie beispielsweise im Ausführungsbeispiel gemäß der Fig. 14 gezeigt. Der Anlagebereich 47 kann insbesondere wenigstens teilweise zu einem an diesem anliegenden Bauteil 48, das im Betrieb der Bodenverdichtungsmaschine Wärme oder Kälte entwickelt, komplementär ausgebildet sein, um eine möglichst flächige Anlage der beiden Elemente aneinander zu gewährleisten. Über den Anlagebereich kann Wärmeenergie zwischen dem Bauteil 48 und dem Wärmetauscherfluid 15 mittels konduktivem Wärmeaustausch ausgetauscht werden.

Auch wenn es vorteilhaft sein kann, wenn der Wärmetauscherfluidtank 13 stoffeinheitlich, beispielsweise aus einem Polymerkunststoff, ausgebildet und/oder insbesondere mittels Spritzguss- und/oder Blasformverfahren hergestellt wird, ist es möglich, den Wärmetauscherfluidtank 15 zumindest bereichsweise aus verschiedenen Materialien auszubilden. Insbesondere für den Anlagebereich 47 hat sich dabei die Verwendung eines Wandmaterials als vorteilhaft erwiesen, das gegenüber dem Wandmaterial des übrigen Wärmetauscherfluidtanks 13 eine relativ höhere Wärmeleitfähigkeit aufweist, wie beispielsweise eine Metallplatte und/oder ein geeigneter Verbundwerkstoff.

Um die Wärmeverteilung innerhalb des im Speicherraum 14 bevorrateten Wärmetauscherfluids 15 möglichst homogen innerhalb des Volumens an Wärmetauscherfluid 15 zu halten, ist es möglich, dass im Speicherraum 14 ein oder mehrere Umwälzeinrichtungen 49 angeordnet sind, die eine Bewegung und Vermischung des Wärmetauscherfluids 15 innerhalb des Speicherraums 14 bewirken und/oder fördern. Dazu kann die Umwälzeinrichtung 49 beispielsweise als Rührpropeller oder ähnliches ausgebildet sein und durch die aktiv angetriebene Eigenbewegung das Wärmetauscherfluid 15 durchmischen. Es ist möglich, eine solche Umwälzeinrichtung 49 beispielsweise an der Bodenwand 32, wie in der Fig. 7 gezeigt, und/oder an der Tankseitenwand 34, wie beispielsweise in der Fig. 12 gezeigt, anzuordnen. Zum Antrieb der Umwälzeinrichtung 49 kann beispielsweise ein in den Figuren nicht näher gezeigter Antriebsmotor, insbesondere ein Elektromotor, vorgesehen sein.

Ergänzend oder alternativ zu der, insbesondere aktiv angetriebenen, Umwälzeinrichtung 49 können im Speicherraum 14 auch ein oder mehrere passive Turbulenzerzeugungseinrichtungen 50 bzw. statische Mischer vorgesehen sein. Hierbei handelt es sich zum Beispiel um Einrichtungen, die beispielsweise Strömungshindernisse für das Wärmetauscherfluid 15 innerhalb des Speicherraums 14 darstellen, wie beispielsweise Leit- und/oder Lochbleche oder ähnliches. Derartige Einrichtungen können eine Durchmischung des Wärmetauscherfluids 15 fördern, insbesondere dann, wenn Schwingungen von außerhalb auf den Wärmetauscherfluidtank 13 und damit auf das Wärmetauscherfluid 15 einwirken, wie sie beispielsweise beim Betrieb der Bodenverdichtungsmaschine 1 auftreten können.

Es kann vorteilhaft sein, wenn Maßnahmen ergriffen werden, die einen Wärmeabtransport vom und/oder eine Wärmezufuhr zum Wärmetauscherfluid 15 effektiv von außerhalb des Wärmetauscherfluidtanks 13 ermöglichen, ohne dass dazu kontinuierlich Wärmetauscherfluid 15 aus dem Speicherraum 14 entnommen und an anderer Stelle wieder zugeführt werden muss. Eine Möglichkeit, um dies zu erreichen, können an der Außenmantelfläche bzw. der Tankaußenwand 24 angebrachte Kühlrippen oder ähnliches sein. Ergänzend oder alternativ ist es allerdings auch möglich, eine oder mehrere rippenartige Ausbuchtungen 54 im Speicherraum 14 vorzusehen, um die Mantelfläche des Speicherraums 14 in kompakter Weise zu erhöhen. Auf diese Weise steht eine größere Außenfläche zur Verfügung, über die Wärme aus dem Wärmetauscherfluid 15 durch die Tankwand hindurch an die Außenumgebung 11 abgeführt werden kann.

Ergänzend oder alternativ kann auch eine Temperiereinrichtung 55, wie beispielsweise in der Fig. 15 gezeigt, von dem Wärmetauscherfluidtank 13 mit umfasst sein. Mit der Temperiereinrichtung 55 wird vorliegend eine Einrichtung bezeichnet, mit der dem innerhalb des Speicherraums 14 bevorrateten Wärmetauscherfluid 15 Wärmeenergie zugeführt oder diesem entzogen werden kann, ohne dass dazu ein Austausch von Teilen des Wärmetauscherfluids 15 erforderlich ist. Die Temperiereinrichtung kann somit beispielsweise eine Heizspirale und/oder ein Kühlfinger oder ähnliches sein.

Auch wenn es möglich ist, dass das innerhalb des Speicherraums 14 bevorratete Volumen an Wärmetauscherfluid 15 ein über den Betrieb der Bodenverdichtungsmaschine 1 in sich geschlossenes Wärmetauscherfluidvolumen ist, kann es auch vorgesehen sein, dass Wärmetauscherfluid 15 im laufenden Betrieb der Bodenverdichtungsmaschine zur Versorgung einer Berieselungseinrichtung 56 abgelassen wird. Dies ist beispielsweise in der Fig. 15 näher veranschaulicht. Gemäß Fig. 15 ist der Wärmetauscherfluidtank 13 über ein Leitungssystem 57 mit einem oder mehreren Berieselungsauslässen 58 fluidleitend verbunden. Mithilfe einer oder mehrerer dieser Berieselungsauslässe 58 kann beispielsweise die Bodenkontakteinrichtung 6 der Bodenverdichtungsmaschine 1 im laufenden Verdichtungsbetrieb zur Reduktion einer Staubentwicklung und/oder zum Verhindern eines Anhaftens von Bodenmaterial an der Bodenkontakteinrichtung 6 und/oder zum Kühlen der Bodenkontakteinrichtung 6 mit Wärmetauscherfluid 15 berieselt werden. Teil des Wärmetauscherfluidtanks 13 kann in diesem Fall ein Fluidauslass 59, beispielsweise in Form eines Absperrhahns oder sonstigen Ventils, sein, durch den/das ein Ablassen von Wärmetauscherfluid 15 aus dem Speicherraum 14 über das Leitungssystem 57 freigegeben, gesperrt und/oder dosiert werden kann. Die exemplarisch in der Fig. 15 veranschaulichte Berieselungseinrichtung 56 kann für jede der in den Figuren gezeigten Ausführungsform in konstruktiver und/oder funktionaler Weise ebenfalls vorhanden sein, was in den Figuren aus Übersichtlichkeitsgründen nicht in jeder Figur separat gezeigt ist.

Teil des Wärmetauscherfluidtanks 13 können ergänzend oder alternativ eine oder mehrere Befüllöffnungen 60, eine oder mehrere Ablassöffnungen 61 und/oder ein oder mehrere Ent-Belüftungsöffnungen 62 sein, wie beispielsweise exemplarisch in der Fig. 6 gezeigt.

Zum Befüllen des Speicherraums 14 mit Wärmetauscherfluid 15 kann, sofern vorhanden, die Aufnahmeöffnung 23 genutzt werden. Es ist aber auch möglich, dass eine spezielle Befüllöffnung 60 zum Befüllen des Speicherraums 14 mit Wärmetauscherfluid 15 ergänzend oder alternativ vorgesehen ist. Diese, idealerweise mittels eines Verschlusselementes verschließbare, Befüllöffnung 60 ist vorzugsweise auf einer Oberseite 63 der elektrischen Betriebskomponente 8 angeordnet.

Zum Transportieren und/oder Lagern der Bodenverdichtungsmaschine 1 kann es vorteilhaft sein, wenn das innerhalb des Speicherraums 14 bevorratete Wärmetauscherfluid 15 aus dem Wärmetauscherfluidtank 13 entfernt werden kann. Hierzu kann es vorgesehen sein, dass der Wärmetauscherfluidtank 13 eine oder mehrere Ablassöffnungen 61 aufweist. Beispielsweise kann es vorgesehen sein, dass der vorstehend bereits beschriebene Fluidauslass 59 auch zum vollständigen Ablassen des Wärmetauscherfluids 15 aus dem Speicherraum 14 genutzt wird. Ergänzend oder alternativ kann der Wärmetauscherfluidtank 15 aber auch eine Ablassöffnung 61, vorzugsweise in der Bodenwand 30, umfassen, die ausschließlich zum Ablassen des Wärmetauscherfluids 15 vorgesehen ist, wie beispielsweise in der Fig. 6 gezeigt.

Beim Einsetzen und/oder Entfernen der elektrischen Betriebskomponenten in den/aus dem Wärmetauscherfluidtank 13 kann es vorkommen, dass ein Über- und/oder Unterdruck im Inneren des Wärmetauscherfluidtanks 13 auftritt. Ferner kann bei einer Erwärmung des Wärmetauscherfluids 15 innerhalb des Speicherraums 14 der Innendruck innerhalb des Wärmetauscherfluidtanks 13 ansteigen (oder beim Abkühlen sinken). Für einen Druckausgleich zur Außenumgebung 41 hin kann es daher vorgesehen sein, dass der Wärmetauscherfluidtank 13 eine oder mehrere Ent-/Belüftungsöffnungen 62 umfasst, die insbesondere einen Luftaustausch mit der Außenumgebung 41 ermöglichen. Die eine oder mehreren Ent-/Belüftungsöffnungen 62 sind vorzugsweise auf der Oberseite 63 der elektrischen Betriebskomponente 8 angeordnet, wie beispielsweise in der Fig. 6 veranschaulicht.

Die elektrische Betriebskomponente 8 kann insbesondere Teil eines elektrischen Antriebssystems sein und dazu über eine oder mehrere strom- und/oder signalleitende Verbindungen 65 mit einer oder mehreren weiteren elektrischen Betriebskomponenten 8 der Bodenverdichtungsmaschine 1 verbunden sein. Zur Herstellung einer strom- und/oder signalleitenden Verbindung kann die elektrische Betriebskomponente 8 einen Verbindungsanschluss 64 aufweisen. Hierbei kann es sich beispielsweise um einen Steckkontakt oder ähnliches handeln. Wenn auch vorzugsweise von allen in den Ausführungsbeispielen gezeigten elektrischen Betriebskomponenten 8 umfasst, sind der Verbindungsanschluss 64 und die stromleitende Verbindung 65 aus Übersichtlichkeitsgründen nicht in allen Ausführungsbeispielen dargestellt.

Wie beispielsweise beim Ausführungsbeispiel gemäß der Fig. 7 veranschaulicht, kann der Verbindungsanschluss 64 auf einer Seite 66 bzw. in einem Bereich der elektrischen Betriebskomponente 8 angeordnet sein, die in Vertikalrichtung oberhalb des Füllstandes 27 des Wärmetauscherfluids 15 liegt. Dies kann insbesondere eine Oberseite 67 der elektrischen Betriebskomponenten 8 sein. Die elektrische Betriebskomponente 8 kann ergänzend oder alternativ in Vertikalrichtung 84 über die Oberseite des Wärmetauscherfluidtanks 13 vorstehen.

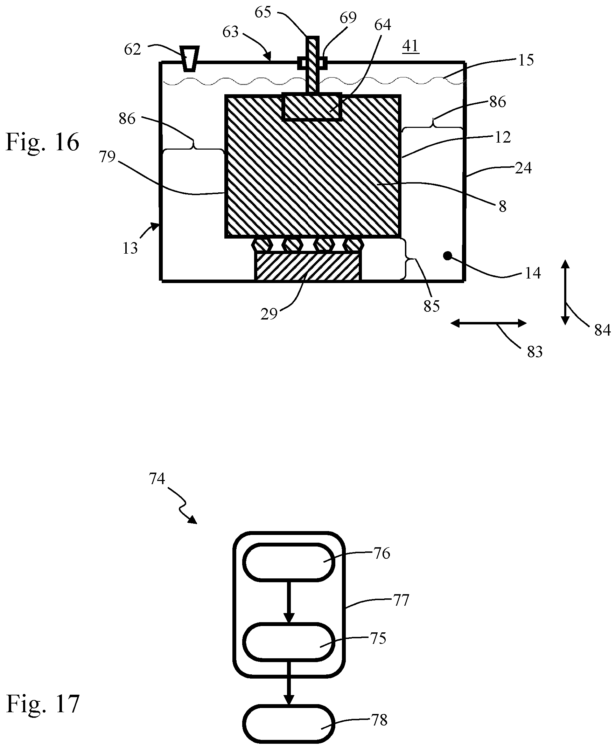

Ergänzend oder alternativ kann der Verbindungsanschluss 64 auch in einem Bereich der elektrischen Betriebskomponente 8 angeordnet sein, der von dem Wärmetauscherfluid 15 benetzt wird. Dieser Bereich der Außenoberfläche 79 der elektrischen Betriebskomponente 8 wird auch als Benetzungsbereich 68 bezeichnet (Fig. 15). Das Ausführungsbeispiel gemäß der Fig. 16 zeigt hierzu einen Verbindungsanschluss 64, der auf seiner Außenseite zusammen mit der elektrischen Betriebskomponente vollständig von dem Wärmetauscherfluid 15 benetzt wird bzw. in dieses eintaucht.

Der Wärmetauscherfluidtank 15 kann eine oder mehrere Kabeldurchführungen 69 (Fig. 16) aufweisen, durch die hindurch eine oder mehrere strom- und/oder signalleitende Verbindungen 65 geführt sein können, die beispielsweise einen innerhalb des Wärmetauscherfluidtanks 13 positionierten Verbindungsanschluss 64 mit einer oder mehreren außerhalb des Wärmetauscherfluidtanks 15 liegenden elektrischen Betriebskomponenten 8 verbinden können.

Der Wärmetauscherfluidtank 13 kann einen oder mehrere Sensoren umfassen und/oder zumindest mit diesen verbunden sein. Dies ist beispielhaft beim Ausführungsbeispiel gemäß der Fig. 14 näher veranschaulicht.

Beispielsweise kann ein Füllstandssensor 70 vorgesehen sein, der zum Erfassen eines Füllstandes 27/27' des Wärmetauscherfluids 15 innerhalb des Speicherraums 14 ausgebildet ist. Der Füllstandssensor 70 kann dazu beispielsweise derart ausgebildet und angeordnet sein, dass er das Unterschreiten und/oder Überschreiten eines unteren und/oder oberen Füllstandgrenzwertes erfasst und/oder einen aktuellen Füllstand des Wärmetauscherfluids 15 innerhalb eines Füllstandbereiches ermittelt. Der Füllstandsensor 70 kann ergänzend oder alternativ derart ausgebildet sein, dass er zur Ermittlung eines ausreichenden Füllstandes mit und ohne in den Wärmetauscherfluidtank 13 eingesetzter elektrischer Betriebskomponente 8 ausgebildet ist.

Ergänzend oder alternativ können ein oder mehrere Temperatursensoren 71 vorgesehen sein, die zur Erfassung einer Ist-Temperatur des Wärmetauscherfluids 15 ausgebildet sind. Weiter ergänzend können beispielsweise auch ein oder mehrere Temperatursensoren vorgesehen sein, die eine aktuelle Ist-Temperatur der elektrischen Betriebskomponente 8 und/oder der Außenumgebung 41 ermitteln.

Der oder die Sensoren, insbesondere der Füllstandssensor 70 und/oder der Temperatursensor 71, können in einer Signalübertragungsverbindung mit einer Steuereinheit 72 (Fig. 14) stehen. Diese kann eine oder mehrere Maschinenfunktionen der Bodenverdichtungsmaschine 1 in Abhängigkeit eines oder mehrerer dieser Sensorwerte steuern. Überschreitet beispielsweise die Ist-Temperatur des Wärmetauscherfluids 15 einen definierten Temperaturschwellenwert, kann die Steuereinheit 72 den Betrieb der Bodenverdichtungsmaschine 1 einschränken oder stoppen, da aufgrund der vergleichsweise hohen Ist-Temperatur des Wärmetauscherfluids 15 kein ausreichender konduktiver Wärmeenergietransfer von der elektrischen Betriebskomponente 8 in das Wärmetauscherfluid 15 mehr gewährleistet ist. In diesem Fall kann die Steuereinheit 72 somit in die Maschinensteuerung der Bodenverdichtungsmaschine 1 eingreifen.

Ergänzend oder alternativ kann auch eine, insbesondere von der Steuereinheit 72 gesteuerte, Anzeigeeinrichtung 73 (Fig. 14) vorgesehen sein. Über diese können beispielsweise Betriebsdaten der Bodenverdichtungsmaschine 1 und/oder Sensordaten, insbesondere des Füllstandsensors 70 und/oder des Temperatursensors 71, und/oder zumindest darauf abgeleitete Informationen etc. angezeigt werden.

Fig. 17 veranschaulicht Schritte eines Verfahrens 74 zum Betrieb einer Bodenverdichtungsmaschine 1, insbesondere einer Bodenverdichtungsmaschine 1, wie vorstehend beschrieben. Das Verfahren 74 ist somit auch insbesondere zur Durchführung mit einer Bodenverdichtungsmaschine 1 mit einem Maschinenrahmen 2, mit einer bewegbar an dem Maschinenrahmen 2 gelagerten Bodenkontakteinrichtung 6, mit einer Schwingungserregungseinrichtung 7, die die Bodenkontakteinrichtung 6 in einem Verdichtungsbetrieb in eine schwingende und/oder stampfende Bewegung versetzt, und mit einer ein Gehäuse 12 umfassenden elektrischen Betriebskomponente 8, wie beispielsweise zu den vorhergehenden Ausführungsbeispielen angegeben, vorgesehen.

Das Verfahren 74 umfasst ein konduktives Übertragen 75 von Wärme zwischen dem Wärmetauscherfluid 15 und der elektrischen Betriebskomponente 8 innerhalb eines Wärmetauscherfluidtanks 13. Die elektrische Betriebskomponente 8 kann derart innerhalb des Wärmetauscherfluidtanks 13 angeordnet sein, dass das Wärmetauscherfluid 15 das Gehäuse 12 der elektrischen Betriebskomponente 8 unmittelbar benetzt, so dass Wärme vom Gehäuse 12 direkt in das Wärmetauscherfluid 15 und umgekehrt übertragen werden kann.

Für das erfindungsgemäße Verfahren 74 ist es insbesondere vorgesehen, dass im Betrieb der Bodenverdichtungsmaschine kein Austauschen von Wärmetauscherfluid des Wärmetauscherfluidtanks aus dem Speicherraum heraus und/oder in den Speicherraum hinein zu Kühl- und/oder Aufwärmzwecken erfolgt bzw. kein Hinzufügen von Wärmetauscherfluid 15 von außerhalb des Speicherraums 14 erfolgt. Das gesamte Wärmetauscherfluidvolumen wird somit von dem Wärmetauscherfluidtank 13 vollständig bevorratet 77 bzw. gehalten.

Es kann allerdings während des Betriebs der Bodenverdichtungsmaschine 1 ein Verbrauchen 78 von im Speicherraum 14 bevorratetem Wärmetauscherfluid 15 erfolgen, beispielsweise durch sukzessives Ablassen des Wärmetauscherfluids 15 über eine Berieselungseinrichtung 56.

### BEZUGSZEICHENLISTE

- 1: Bodenverdichtungsmaschine
- 1A: Vibrationsstampfer
- 1B: Rüttelplatte
- 1C: Grabenwalze
- 1D: Walze
- 2: Maschinenrahmen
- 3: Handführungseinrichtung
- 4: Schwingungsdämpfungselemente
- 5: Unterbau
- 6: Bodenkontakteinrichtung
- 7: Schwingungserregungseinrichtung
- 8: elektrische Betriebskomponente
- 9: elektrischer Energiespeicher
- 10: Stromrichter
- 11: Elektromotor
- 12: Gehäuse
- 13: Wärmetauscherfluidtank
- 14: Speicherraum
- 15: Wärmetauscherfluid
- 16: Wärmeaustauschfläche
- 17: Kühllufteinrichtung
- 18: Schwingungsdämpfungselemente
- 19: Schwingungsdämpfungselemente
- 20: Vorderwagen
- 21: Hinterwagen
- 22: Knickgelenkeinrichtung
- 23: Aufnahmeöffnung
- 24: Tankaußenwand
- 25: Tankinnenwand
- 26: Aufnahmeraum
- 27: Füllstand
- 28: Kontaktmembran
- 29: Aufstandselemente
- 30: Bodenwand
- 31: Abstand
- 32: Bodenwand
- 33: Seitenführungselemente
- 34: Tankseitenwand
- 35: kombinierte Stabilisierungselemente
- 36: Einlaufschräge
- 37: Schwingungsdämpfungselemente
- 38: Zwischenraum
- 39: Abdichtelement
- 40: Anlagekragen
- 41: Außenumgebung
- 42: Deckel
- 43: Verbindungsgelenk
- 44: Adapterdeckel
- 45: Deckelgrundkörper
- 46: Adapterstück
- 47: Anlagebereich
- 48: Betrieb der Bodenverdichtungsmaschine Wärme entwickelndes Bauteil
- 49: Umwälzeinrichtung
- 50: passive Turbulenzerzeugungseinrichtung
- 51: Fixiereinrichtung
- 52: Grundkörper
- 53: Anpresselement
- 54: Ausbuchtung
- 55: Temperiereinrichtung
- 56: Berieselungseinrichtung
- 57: Leitungssystem
- 58: Berieselungsauslass
- 59: Fluidauslass
- 60: Befüllöffnung
- 61: Ablassöffnung
- 62: Ent-/Belüftungsöffnung
- 63: Oberseite
- 64: Verbindungsanschluss
- 65: strom- und/oder signalleitende Verbindung
- 66: Seite der elektrischen Betriebskomponente oberhalb des Wärmetauscherfluids
- 67: Oberseite
- 68: Benetzungsbereich
- 69: Kabeldurchführung
- 70: Füllstandssensor
- 71: Temperatursensor
- 72: Steuereinheit
- 73: Anzeigeeinrichtung
- 74: Verfahren zum Betrieb einer Bodenverdichtungsmaschine
- 75: konduktives Übertragen
- 76: unmittelbar benetzt
- 77: Bevorraten
- 78: Verbrauchen von Wärmetauscherfluid
- 79: Außenoberfläche des Gehäuses
- 80: Innenoberfläche des Wärmetauscherfluidtanks
- 81: Abdichtbereich
- 82: Energiespeicherelemente
- 83: Horizontalrichtung
- 84: Vertikalrichtung
- 85: Horizontalabstand
- A: Vorwärtsrichtung

## Patentansprüche

1. Bodenverdichtungsmaschine (1), umfassend
- einen Maschinenrahmen (2),
- eine bewegbar an dem Maschinenrahmen (2) gelagerte Bodenkontakteinrichtung (6),
- eine Schwingungserregungseinrichtung (4), die die Bodenkontakteinrichtung (6) in einem Verdichtungsbetrieb in eine schwingende und/oder stampfende Bewegung versetzt, und
- eine ein Gehäuse (12) umfassende elektrische Betriebskomponente (8),
**dadurch gekennzeichnet,**
**dass** sie einen Wärmetauscherfluidtank (13) mit einem Speicherraum (14) aufweist, der mit einem Wärmetauscherfluid (15) befüllt ist, und dass eine Wärmeaustauschfläche (16) innerhalb des Wärmetauscherfluidtanks (13) vorhanden ist, über die Wärmeenergie zwischen der elektrischen Betriebskomponente (8) und dem innerhalb des Speicherraums (14) befindlichen Wärmetauscherfluid (15) austauschbar ist, und
**dass** sie eine Berieselungseinrichtung (56) mit einem Fluidauslass (59) aufweist, und dass der Fluidauslass (59) fluidleitend mit dem Wärmetauscherfluidtank (13) verbunden ist, derart, dass im Betrieb des Bodenverdichtungsmaschine (1) im Wärmetauscherfluidtank (13) enthaltenes Wärmetauscherfluid (15) über den Fluidauslass (59) der Berieselungseinrichtung (56) austreten kann..

2. Bodenverdichtungsmaschine (1) gemäß Anspruch 1,
**dadurch gekennzeichnet,**
**dass** der Wärmetauscherfluidtank (13) wenigstens eines der folgenden Merkmale aufweist:
- er weist eine in Vertikalrichtung (84) obenliegende Aufnahmeöffnung (23) auf, wobei die elektrische Betriebskomponente (8) durch die Aufnahmeöffnung (23) hindurch in den mit Wärmetauscherfluid (15) befüllten Speicherraum (14) hineinragt,
- er weist eine innerhalb des Speicherraums (14) wenigstens einen Teil der Wärmeaustauschfläche (16) bildende Kontaktmembran (28) aus einem flexiblen und fluiddichten Material auf, wobei die Kontaktmembran (28) einen Aufnahmeraum (26) für die elektrische Betriebskomponente (8) innerhalb des Wärmetauscherfluidtanks (13) von dem das Wärmetauscherfluid (15) aufnehmenden Speicherraum (14) innerhalb des Wärmetauscherfluidtanks (13) trennt.

3. Bodenverdichtungsmaschine (1) gemäß einem der vorhergehenden Ansprüche,
**dadurch gekennzeichnet,**
**dass** das Gehäuse (12) der elektrischen Betriebskomponente (8) direkt mit dem Wärmetauscherfluid (15) innerhalb des Wärmetauscherfluidtanks (13) benetzt wird, und dass das Gehäuse (12) der elektrischen Betriebskomponente (8) die Wärmeaustauschfläche (16) bildet.

4. Bodenverdichtungsmaschine (1) gemäß einem der vorhergehenden Ansprüche,
**dadurch gekennzeichnet,**
**dass**, insbesondere innerhalb des Speicherraums (14), ein oder mehrere Seitenführungselemente (33) vorhanden sind, die zur Ausrichtung der elektrischen Betriebskomponente (8) relativ zum Wärmetauscherfluidtank (13) in Horizontalrichtung (83) ausgebildet sind und/oder ein oder mehrere Aufstandselemente (29) vorhanden sind, auf denen die elektrische Betriebskomponente (8) innerhalb des Wärmetauscherfluidtanks (13) aufsteht.

5. Bodenverdichtungsmaschine (1) gemäß einem der vorhergehenden Ansprüche,
**dadurch gekennzeichnet,**
**dass** das Gehäuse (12) der elektrischen Betriebskomponente (8) einen, dieses insbesondere umlaufenden, Anlagekragen (40) aufweist, der an dem Wärmetauscherfluidtank (13) anliegt und/oder auf dem Wärmetauscherfluidtank (13) aufliegt.

6. Bodenverdichtungsmaschine (1) gemäß einem der vorhergehenden Ansprüche,
**dadurch gekennzeichnet,**
**dass** der Abstand (31, 85) der Außenoberfläche (79) des Gehäuses (12) der elektrischen Betriebskomponente (8) zur Innenoberfläche (80) des Wärmetauscherfluidtanks (13), insbesondere in einer horizontalen Ebene, wenigstens 5mm, insbesondere wenigstens 10mm, beträgt und/oder dass ein oder mehrere Abdichtelemente (39) vorhanden sind, die den Speicherraum (14) des Wärmetauscherfluidtanks (13) zur Außenumgebung (41) hin abdichten, insbesondere in einem Abdichtbereich (81) zwischen dem Wärmetauscherfluidtank (13) und der elektrischen Betriebskomponente (8).

7. Bodenverdichtungsmaschine (1) gemäß einem der vorhergehenden Ansprüche,
**dadurch gekennzeichnet,**
**dass** der Wärmetauscherfluidtank (13) einen den Speicherraum (14) bildenden Grundkörper (52) und einen den Speicherraum (14) zur Außenumgebung hin verschließenden Deckel (42) umfasst, wobei insbesondere ein Verbindungsgelenk (43) zwischen dem Grundkörper (52) und dem Deckel (42) vorhanden ist, derart dass der Deckel (42) gegenüber dem Grundkörper (52) um das Verbindungsgelenk (43) verstellbar ist.

8. Bodenverdichtungsmaschine (1) gemäß einem der vorhergehenden Ansprüche,
**dadurch gekennzeichnet,**
**dass** eine oder mehrere Schwingungsdämpfungselemente (37) vorhanden sind, die eine Schwingungsübertragung zwischen der elektrischen Betriebskomponente (8) und dem Wärmetauscherfluidtank (13) dämpfen und/oder dass der Wärmetauscherfluidtank (13) über ein oder mehrere Schwingungsdämpfungselemente (18) mit dem Maschinenrahmen (2) verbunden ist.

9. Bodenverdichtungsmaschine (1) gemäß einem der vorhergehenden Ansprüche,
**dadurch gekennzeichnet,**
**dass** der Wärmetauscherfluidtank (13) wenigstens eines der folgenden Merkmale aufweist:
- er weist einen Anlagebereich (47) auf seiner Außenoberfläche (24) auf, wobei ein im Betrieb der Bodenverdichtungsmaschine (1) Wärme entwickelndes Bauteil (48) in unmittelbarer Anlage mit diesem Anlagebereich (47) steht;
- er umfasst eine Befüllöffnung (60) und/oder einer Ablassöffnung (61) und/oder eine Ent-Belüftungsöffnung (62).

10. Bodenverdichtungsmaschine (1) gemäß einem der vorhergehenden Ansprüche,
**dadurch gekennzeichnet,**
**dass** eine Umwälzeinrichtung (49) und/oder passive Turbulenzerzeugungseinrichtung (50) innerhalb des Wärmetauscherfluidtanks (13) vorhanden ist.

11. Bodenverdichtungsmaschine (1) gemäß einem der vorhergehenden Ansprüche,
**dadurch gekennzeichnet,**
**dass** sie einen Elektromotor (11) umfasst, und dass der Elektromotor (11) in Vorwärtsrichtung (A) der Bodenverdichtungsmaschine (1) vor dem Wärmetauscherfluidtank (13) angeordnet ist.

12. Bodenverdichtungsmaschine (1) gemäß einem der vorhergehenden Ansprüche,
**dadurch gekennzeichnet,**
**dass** sie einen Füllstandssensor (70) zur Ermittlung eines Füllstandes (27) des Wärmetauscherfluids (15) innerhalb des Wärmetauscherfluidtanks (13) und/oder einen Temperatursensor (71) zur Ermittlung einer Temperatur des Wärmetauscherfluids (15) innerhalb des Wärmetauscherfluidtanks (13) umfasst.

13. Bodenverdichtungsmaschine (1) gemäß einem der vorhergehenden Ansprüche,
**dadurch gekennzeichnet,**
**dass** im Wärmetauscherfluidtank (13) eine Temperiereinrichtung (55) zum Kühlen und/oder Erwärmen des Wärmetauscherfluids (15) vorhanden ist, wobei die Temperiereinrichtung (55) derart ausgebildet ist, dass ein Kühlen und/oder Erwärmen des Wärmetauscherfluids (15) ohne gleichzeitige Entnahme und/oder Zufuhr von dem Wärmetauscherfluid (15) in den Wärmetauscherfluidtank (13) erfolgt.

14. Bodenverdichtungsmaschine (1) gemäß einem der vorhergehenden Ansprüche,
**dadurch gekennzeichnet,**
**dass** die elektrische Betriebskomponente (8)
- ein elektrischer Energiespeicher (9) mit einem oder mehreren Energiespeicherelementen (82);
- ein Stromrichter (10) und/oder
- ein Elektromotor (11)
und/oder
**dass** ist die Bodenverdichtungsmaschine (1) ein Vibrationsstampfer (1A), eine Rüttelplatte (1B), eine Grabenwalze (1C) oder eine Walze (1D) ist.

15. Verfahren (74) zum Betrieb einer Bodenverdichtungsmaschine (1), insbesondere einer Bodenverdichtungsmaschine (1) gemäß einem der vorhergehenden Ansprüche, die Bodenverdichtungsmaschine (1) umfassend
- einen Maschinenrahmen (2),
- eine bewegbar an dem Maschinenrahmen (2) gelagerte Bodenkontakteinrichtung (6),
- eine Schwingungserregungseinrichtung (4), die die Bodenkontakteinrichtung (6) in einem Verdichtungsbetrieb in eine schwingende und/oder stampfende Bewegung versetzt, und
- eine ein Gehäuse (12) umfassende elektrische Betriebskomponente (8),
das Verfahren (74) umfassend ein konduktives Übertragen (75) von Wärme zwischen dem Wärmetauscherfluid (15) und der elektrischen Betriebskomponente (8) innerhalb eines Wärmetauscherfluidtanks (13) sowie im Betrieb der Bodenverdichtungsmaschine (1) ein Verbrauchen (78) von Wärmetauscherfluid (15) durch eine Berieselungseinrichtung (56).

16. Verfahren (74) gemäß Anspruch 15,
**dadurch gekennzeichnet,**
**dass** die elektrische Betriebskomponente (8) derart innerhalb des Wärmetauscherfluidtanks (13) angeordnet ist, dass das Wärmetauscherfluid (15) das Gehäuse (12) der elektrischen Betriebskomponente (8) unmittelbar benetzt, so dass Wärme vom Gehäuse (12) direkt in das Wärmetauscherfluid (15) übertragen wird und/oder dass im Betrieb der Bodenverdichtungsmaschine (1) ein vollständiges Bevorraten (77) von Wärmetauscherfluid (15) des Wärmetauscherfluidtanks (13) im Speicherraum (14) erfolgt.
